# EUROPEAN PATENT SPECIFICATION

(11) **EP 1 193 792 B1**
(45) Date of publication and mention of the grant of the patent: **25.03.2009**
(21) Application number: 01123595.9
(22) Date of filing: 01.10.2001
(51) Int. Cl.: H01Q 1/24, H01Q 3/24, H01Q 3/26

(54) **Mobile communication base station equipment**
Basisstationsanordnung für mobile Funkkommunikation
Equipement pour une station de base pour radio communication mobile

(30) Priority: 02.10.2000 JP 2000301895; 02.10.2000 JP 2000301896; 27.02.2001 JP 2001052659
(43) Date of publication of application: 03.04.2002
(73) Proprietor: NTT DoCoMo, Inc., Tokyo 100-6150 (JP)
(72) Inventor: Yamaguchi, Ryo, Kanagawa 240-0111 (JP); Terada, Noriyoshi, Yokosuka-shi, Kanagawa 239-0806 (JP); Nojima, Toshio, Yokosuka-shi, Kanagawa 239-0833 (JP)
(74) Representative: Hoffmann, Eckart

(56) References cited:
- EP-A- 0 932 218
- WO-A-95/09490
- WO-A-98/42150
- WO-A-99/52311
- DE-A- 19 737 136
- US-A- 5 596 333
- US-A- 5 684 491

## Description

### BACKGROUND OF THE INVENTION

The present invention relates to a base station equipment of a mobile communication system which is intended to enable a communication with a mobile station with a narrow angle directivity (narrow angle beam) antenna in order to reduce the quantity of interferences.

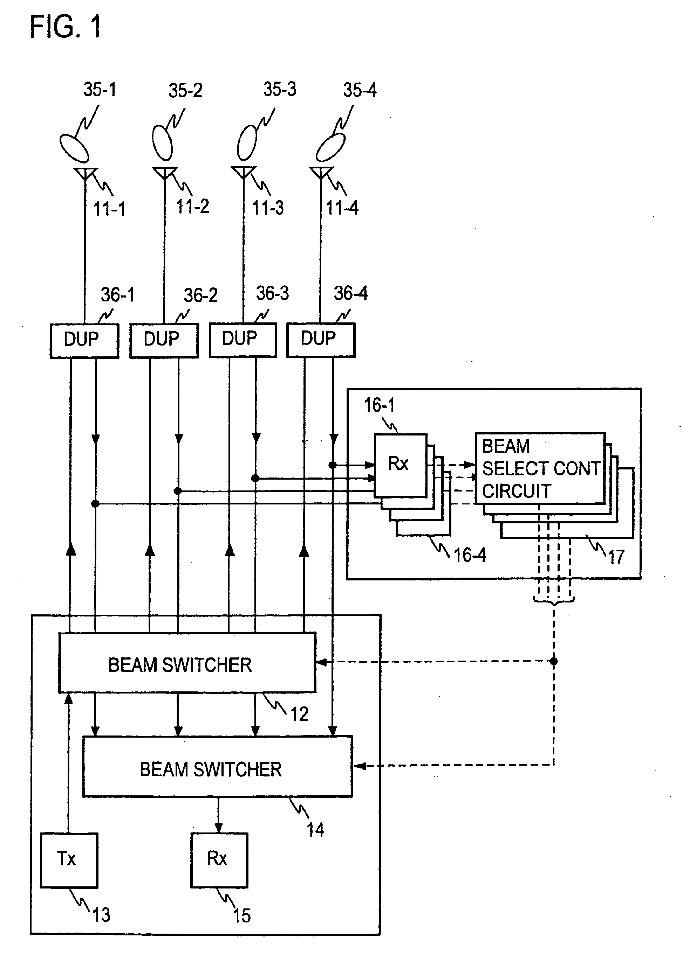

To explain the background of the present invention arrangements illustrated in Figs. 1 to 4 will be described. It should be noted that these arrangements represent in-house prior art to the proprietor of this patent but are not prior art in the sense of Art. 54 EPC.

An adaptive array antenna in a conventional mobile communication base station equipment is constructed by providing a plurality of receivers for each communication channel, adjusting an antenna weight to control the direction of a principal beam in the antenna directivity response, extracting an optimal received signal, and employing the antenna weight which is used for the optimal signal in controlling the direction of a principal beam in the directivity response of a transmitting antenna. However, this practice requires a plurality of transmitters/receivers for each channel for both the transmission and the reception, disadvantageously increasing the scale of the equipment.

To accommodate for this problem, there is a technique as illustrated in Fig. 1 where a beam switcher 12 selectively connects a transmitter 13 to one of a plurality of antennas 11-1 to 11-4 having narrow beam angle directivities 35-1 to 35-4 in mutually different directions through respective duplexers 36-1 to 36-4 while a beam switcher 14 selectively connects a receiver 15 to one of the antennas, thus minimizing the number of transmission/reception network paths. According to this technique, receivers 16-1 to 16-4 are used to measure the signal strength from respective narrow beam antenna 11-1 to 11-4 to allow a beam selection control circuit 17 to switchably control the beam switchers 12, 14 so that transmitter 13 and the receiver 15 may be connected to one of the antennas having the maximum received signal power. With this technique, to scan the arriving direction of a received radio wave, a number of direction finder receivers 16-1 to 16-4 are necessary which is equal to the number of antenna branches, which is four in Fig. 1. When the technique is applied to the mobile communication, which represents a multi-path environment, a difficulty is encountered in establishing an accurate beam switching because of a variation in the signal strength which occurs independently on each antenna branch. (See Tadashi Matsumoto, Seiji Nishioka and David J. Hodder, "Beam-Selection Performance Analysis of a Switched Multibeam Antenna System in Mobile Communications Environments," IEEE Trans., VT, Vol. 46, No. 1 (Feb. 1997).)

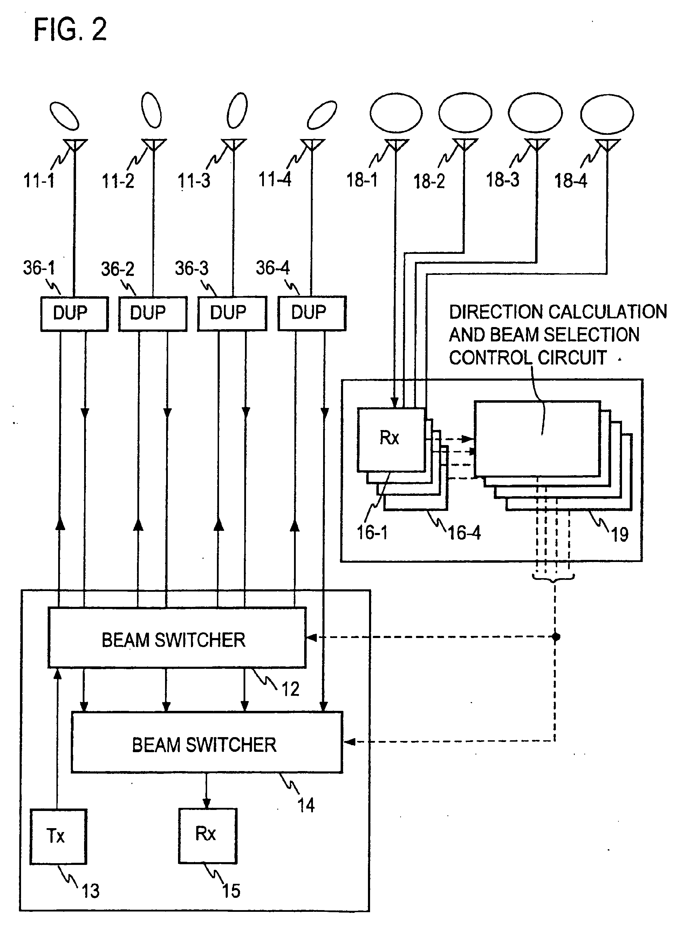

A high resolution signal processing technique such as MUSIC is known in the art to estimate the arriving direction of a radio wave (DOA; Direction of Arrival), but requires a complex treatment including the calculation of a correlation matrix, resulting in a tremendous length of time as the number of antennas increases. (See R.O. Schmidt, "Multiple Emitter Location and Signal Parameter Estimation," IEEE Trans. AP. Vol-34, No. 3 (Mar. 1986).) The treatment of this technique is even more complicated when plural antenna having different directivities are used. For this reason, it necessitates the provision of an array antenna including antenna elements 18-1 to 18-4 having a common directivity for direction finding purpose, separately from communication antennas, as shown in Fig. 2. Received signals from the antenna elements 18-1 to 18-4 are fed to the receivers 16-1 to 16-4, outputs of which are processed in a circuit 19 according to the MUSIC procedure to determine the direction on which the transmitting mobile station is located, thus controlling the beam switchers 12 and 14.

In the actual operation of the mobile communication, there are users (mobile stations) who move rapidly during the communication intervals and who frequently change the channels on one hand, and there are many users who complete the communications without substantial movements on the other hand. Because the mobile communication base station equipment premises that every user (mobile station) be serviced during a rapid movement thereof, it uses antenna which exhibit a common wide angle directivity response for a plurality of frequency channels and time slots. Thus, when commencing a communication with a particular user (mobile station), the base station equipment is radiating radio waves in directions of its service area such as a sector area, for example, other than the direction on which the user is located, and this represents a wasteful power dissipation. It will thus be seen that the use of antennas which exhibit a common angle directivity response for every frequency channel and time slot is problematic from the standpoints of radio wave environment and power saving. There is then a proposal which uses an array antenna to produce a narrow beam angle directivity response separately for each frequency channel and time slot so that a narrow angle beam be always directed to a user, thus tracking it. The proposed technique is excellent when viewed from above standpoints, but presents problems in that an increased area must be provided for installation of antennas and the equipment must be scaled up. In addition, a complex signal processing system is needed.

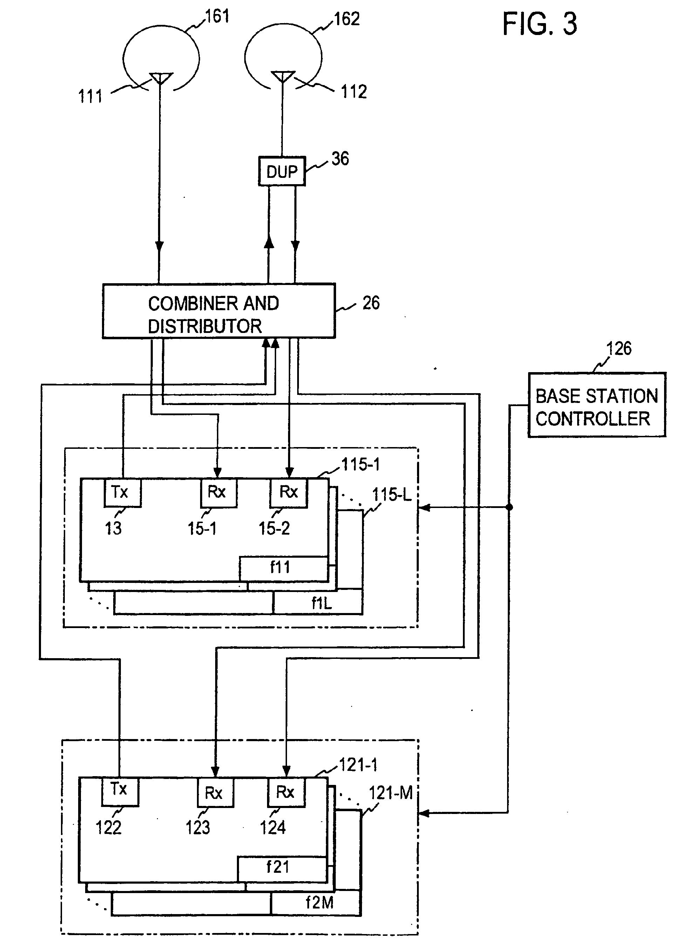

An arrangement of base station equipment is shown in Fig. 3. A receiving antenna 111 and a transmitting /receiving antenna 112 are oriented in a common direction and have directivity responses indicated by principal beams 161 and 162, respectively, which are 120° wide. The receiving antenna 111 is directly connected to a combiner and distributor 26 while the transmitting/receiving antenna 112 is connected thereto through a duplexer 36. Each transmitter 13 of transmitter/receiver assemblies 115-1 to 115-L for frequency channels f1s to f1L inclusive of control channels and communication channels is connected to the transmit port of the combiner and distributor 26 while receivers 15-1 and 15-2 are connected to the respective receive port of the combiner and distributor 26 for the antennas 111 and 112, thus allowing the transmission and the reception of the control channel and the communication channel. Communication channel transmitter/receiver assemblies 121-1 to 121-M for frequency channels f21 to f2M each include a transmitter 122 which is connected to the transmit port of the combiner and distributor 26 and also each include receivers 123 and 124 which are connected to the respective receive port of the combiner and distributor 26 for the antennas 111 and 112, thus allowing the transmission and the reception of the communication channels. Each of the receivers 15-1 and 15-2 is adapted to diversity reception as is each of the receivers 123 and 124.

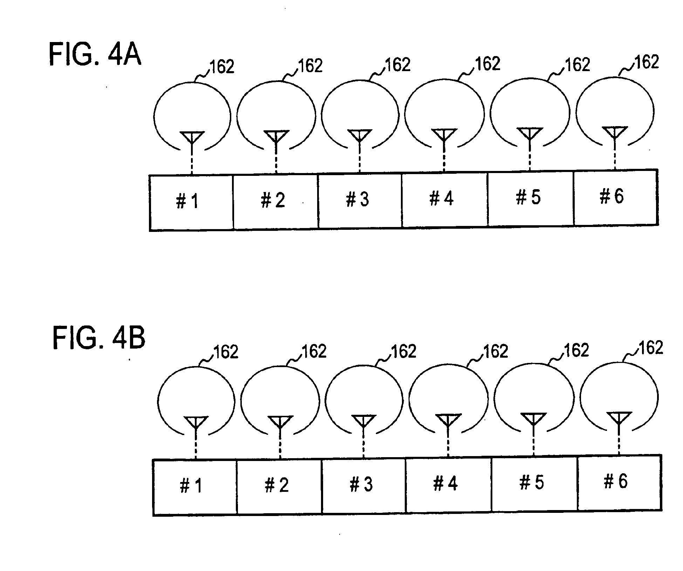

Time slots which are utilized by the transmitter/receiver assemblies 115-1 to 115-L are shown in Fig. 4A and time slots which are utilized by the transmitter/receiver assemblies 121-1 to 121-M are shown in Fig. 4B. The beam 162 of the antenna which is used in each transmission has a width of 120°, and this means that a common beam is used for every frequency channel and time slot. A base station controller 126 allocates a channel which is used by either one of the transmitter/receiver assemblies 115-1 to 115-L and 121-1 to 121-M during a particular time slot.

As discussed, the arrangement which employs the direction finding of the mobile station and a result of such scan is used in switching a transmit/receive beam suffers from the accuracy of directional finding, the scale of equipment and the quantity of calculations.

It will also be seen that because a wide angle beam antenna is fixedly assigned to every channel in a conventional base station equipment, this means that the equipment dissipates a wasteful radiation power in directions in its service area (such as a sector, for example) other than the direction on which a desired mobile station is located, contributing to increasing the quantity of interferences with other base stations.

A mobile communication base station equipment according to the pre-characterizing portion of claim 1 is disclosed in US 5,596,333 A. This document describes an embodiment in which a 360° spatial transmission range of a base station equipment is divided equally into transmission sectors and reception sectors served by respective antennas of a transmission and a receiving antenna array. Each reception sector is substantially coincident with two corresponding transmission sectors. The direction of a received signal is determined on the basis of the signal strengths with which the signal is received in the respective reception sectors.

DE 197 37 136 A describes a directivity controllable antenna equipment, wherein the direction of a mobile station is estimated based on the signal strength of the received signals from an array antenna, and the directivity of the array antenna is controlled based on the estimated direction. The direction of the mobile station is estimated by using a technique such as the MUSIC or ESPRIT method.

EP 0 932 218 A discloses to an adaptive array antenna system and describes that the directivity of an array antenna is controlled by the direction-of-arrival estimation based on a subspace-based algorithm such as MUSIC or ESPRIT. The direction estimation method employed in this document is similar to the one employed in DE 197 37 136 A.

It is an object of the invention to provide a mobile communication base station equipment which enables a communication with a mobile station with a narrow angle beam by performing a direction finding of an arriving radio wave at a higher accuracy with a minimum scale of equipment and with a minimum volume of calculations.

It is another object of the invention to provide a mobile communication base station equipment which allows the quantity of interferences caused by radiated power to be reduced as compared with the prior art.

This object is achieved by a mobile communication base station equipment as claimed in claim 1. Preferred embodiments of the invention are subject-matter of the dependent claims.

According to a first aspect of the present invention, there are provided a pair of wide angle beam antennas located close to each other for substantially covering a service area which is covered by an entire assembly including a plurality of narrow angle beams. One of the antennas of the pair is connected to a communication receiver while the other antenna is connected to a direction finder receiver. The direction on which a mobile station transmitting a particular received radio wave is located is determined on the basis of phases of received signals from the both receivers. The function of the wide angle beam antenna may be served by one of the plurality of antennas which are used to form the narrow angle beams.

According to a second aspect of the present invention, there are provided a single wide angle beam antenna and a plurality of narrow angle beam antennas which collectively cover a service area of the wide angle beam antenna. A traveling speed of a mobile station and the direction of a narrow angle beam on which the mobile station is located are detected. On the basis of such information, when the traveling speed is high, one of communication channel transmitters/receivers capable of feeding transmitting power is allocated to the wide angle beam antenna while when the traveling speed is low, one of the communication channel transmitters/receivers capable of feeding transmitting power is allocated to the narrow angle beam antenna corresponding to the direction on which the mobile station is located.

### BRIEF DESCRIPTION OF THE DRAWINGS

- Fig. 1: is a block diagram of an example of a mobile communication base station equipment;
- Fig. 2: is a block diagram of another example of a mobile communication base station equipment;
- Fig. 3: is a block diagram of a further example of a base station equipment;
- Figs. 4A: and 4B are diagrams illustrating relationships between time slots and antenna beams in a base station equipment;
- Fig. 5A: is a block diagram of an embodiment according to a first aspect of the present invention;
- Fig. 5B: graphically shows a relationship between a phase difference and an angle of an arriving radio wave;
- Fig. 5C: is a block diagram of a specific example of a direction measuring unit shown in Fig. 5A;
- Fig. 6: is a block diagram illustrating the application of the embodiment shown in Fig. 5A to a plurality of communication channels;
- Fig. 7A: is a block diagram of an embodiment according to the first aspect of the present invention when a narrow angle beam and a wide angle beam use an antenna in common;
- Fig. 7B: illustrates a relationship between the plurality of narrow angle beams and the wide angle beam shown in Fig. 7A;

Fig. 8 is a block diagram of an example in which the embodiment shown in Fig. 7A is applied to a plurality of communication channels;
Figs. 9A, B and C are illustrations of the principle of operation for obtaining a reliable measured direction;
Fig. 10 is a schematic view showing a functional arrangement of a direction measuring unit 23 which is based on the principle illustrated in Fig. 9;
Fig. 11 is a flow chart of an exemplary processing procedure according to the principle illustrated in Fig. 9;
Figs. 12A, B and C are illustrations of another principle of operation for obtaining a reliable measured direction;
Fig. 13 is a schematic view showing a functional arrangement of a direction measuring unit 23 which is based on the principle illustrated in Fig. 12;
Fig. 14 is a flow chart of an exemplary processing procedure according to the principle illustrated in Fig. 12;
Figs. 15A, B and C are illustrations of a further principle of operation for obtaining a reliable measured direction;
Fig. 16 is a schematic view showing an exemplary functional arrangement of a direction measuring unit 23 which is based on the principle illustrated in Fig. 15;
Fig. 17 is a flow chart of an exemplary processing procedure according to the principle illustrated in Fig. 15;
Fig. 18 is a schematic view showing a functional arrangement of a direction measuring unit 23 according to a further embodiment of obtaining a reliable measured direction;
Fig. 19 is a flow chart of an exemplary processing procedure used by the direction measuring unit 23 shown in Fig. 18;
Fig. 20 is a schematic view showing a general functional arrangement of a direction measuring unit 23 for obtaining a reliable measured direction;
Fig. 21 graphically shows a result of experiments determining an instantaneous direction;
Fig. 22 graphically shows a result of experiments in which instantaneous directions measured are averaged to determine a mean direction;
Fig. 23 graphically shows a result of experiments in which the reliable direction is determined to be the direction being measured;
Fig. 24 is a block diagram of an embodiment according to the second aspect of the present invention;
Fig. 25A shows examples of time slots of control and communication channel transmitters/receivers and prevailing antenna directivity responses which occur in the embodiment shown in Fig. 24;
Fig. 25B and C show two examples of time slots of communication channel transmitters/receivers and prevailing antenna directivity responses which occur in the embodiment shown in Fig. 24;
Fig. 26A is an illustration of a procedure of determining the traveling speed caused by a fading pitch of a mobile station and selecting a particular beam;
Fig. 26B illustrates an exemplary relationship between an antenna beam width (layer) and transmitted power;
Fig. 27 is a schematic view of another embodiment according to the second aspect of the present invention in which a narrow angle beam communication channel transmitter/receiver is connected to a narrow angle beam antenna during a time slot which is assigned depending on the direction of a mobile station;
Fig. 28A is a schematic view showing an exemplary relationship between time slots for control and communication channel transmitters/receivers and prevailing antenna beams which occur in the embodiment shown in Fig. 27;
Fig. 28B is a schematic illustration of another relationship between time slots of communication channel transmitters/receivers and prevailing antenna beams which occur in the embodiment shown in Fig. 27;
Fig. 29 is a schematic view showing another specific example of a beam selection information detector unit 154 shown in Fig. 24; and
Fig. 30 is a schematic view of an embodiment which results when the diversity function is removed from the embodiment shown in Fig. 24.

### DETAILED DESCRIPTION OF EMBODIMENTS

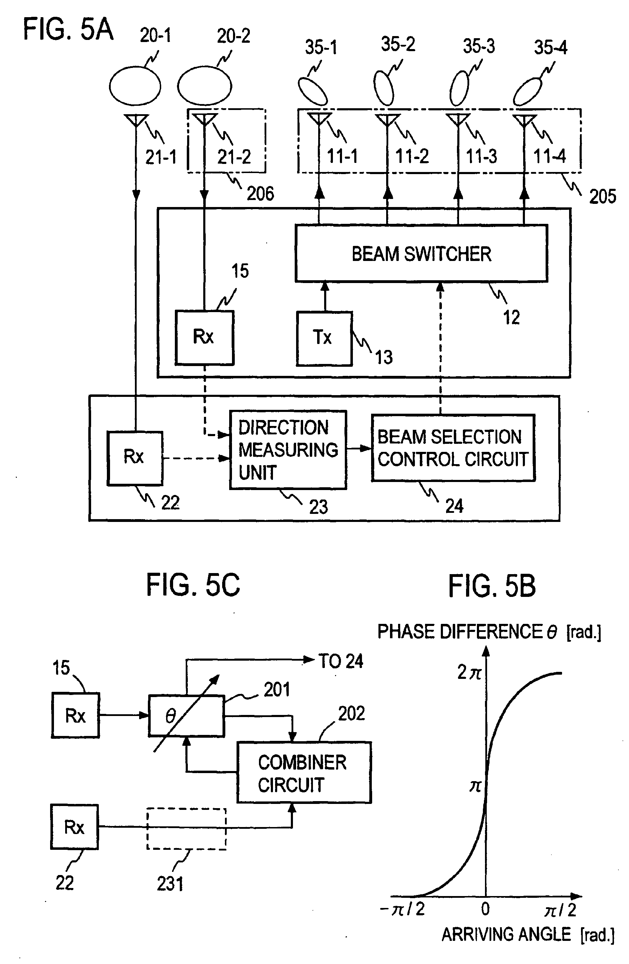

Fig. 5A shows an embodiment according to the first aspect of the present invention, and corresponding parts to those shown in Fig. 1 are designated by like reference characters as used in Fig. 1, it being understood that throughout the description to follow, a similar convention is followed. In this embodiment, there are provided a pair of antennas 21-1 and 21-2 which exhibit a wide angle directivity response (or wide angle beam). Each of the wide angle beam antennas 21-1 and 21-2 is capable of substantially covering a service area which is collectively covered by narrow angle beam antennas 11-1 to 11-4. It is to be understood that the both antennas 21-1 and 21-2 are located close to each other so as to be within the order of one-half the wavelength (λ) of radio waves involved, and have wide angle beams 20-1 and 20-2 having central axes which are parallel to each other.

A direction finder receiver 22 is connected to one of the wide angle beam antennas, 21-1, while a communication receiver 15 is connected to the other wide angle beam antenna 21-2. A received signal form the communication receiver 15 and a received signal from the direction finder receiver 22 are input to a direction measuring unit 23, which determines the direction of a mobile station transmitting the radio wave of the received signal on the basis of a phase difference between the both received signals. A result of the measurement is input to a beam selection control circuit 24, which controls a beam switcher 12, thus connecting a transmitter 13 to one of the narrow angle beam antennas 11-1 to 11-4 having the direction of a beam 35-i (where i=1,2,3 or 4) which is aligned with the determined direction.

Channel information, synchronization information or a channel estimation information which is received by the communication receiver 15 is received under the same terms and conditions as the direction finder receiver 22. Since the wide angle beam antennas 21-1 and 21-2 are located close to each other, it follows that the correlation between the received signals from the wide angle beam antennas 21-1 and 21-2 is close to 1. Accordingly, by detecting the phase difference between the both received signals and adjusting the phase so that these signals cancel each other, namely choosing these signals to be of opposite phases, it is possible to estimate the arriving direction on the basis of the phase difference alone since the correlation between the signals is substantially equal to 1 with a minimal amplitude difference. By way of example, as illustrated in Fig. 5C, the received signal from one of the receivers, 15, is fed to a variable phase shifter 201, the output of which is added with the output signal from the other receiver 22 in a combiner circuit 202. A phase shift which occurs in the variable phase shifter 201 is controlled in accordance with an output from the combiner circuit 202 so that the combiner circuit 202 delivers a zero output. It is to be understood that the both inputs to the combiner circuit 202 are pre-processed to an equal amplitude. Accordingly, when the both inputs to the combiner circuit 202 are of opposite phases to each other, it provides an output of zero, and a phase shift which prevails in the variable phase shifter 201 represents a phase difference θ between the both received signals, which is then delivered to the beam selection control circuit 24.

Thus, because the spacing between the antennas 21-1 and 21-2 are equal to λ/2 or less, the phase difference (or phase shift) θ has a one-to-one correspondence with respect to the arriving angle, as shown in Fig. 5B. When the phase difference (or phase shift) θ is equal to π, the arriving direction of the radio wave forms an angle of 0 with respect to a perpendicular or a bisector of a line joining the antennas 21-1 and 21-2. As the phase difference (or adjusted phase shift) θ becomes less than π, the arriving direction shifts to the left from the perpendicular, and conversely as the phase difference (or adjusted phase shift) θ becomes greater than π, the arriving direction shifts to the right from the perpendicular. Accordingly, the beam switcher 12 is operated to connect the transmitter 13 to the antenna 11-i having the narrow angle beam 35-i which corresponds to the arriving direction which has been estimated by the phase difference (or adjusted phase shift) θ. In this manner, the transmitting beam 35-i of the base station equipment can be made to track the direction of the mobile station as it travels. It should be noted that the arriving direction of the radio wave can be detected merely by determining the phase difference (or adjusting the phase shift) without resort to adaptive signal processing and/or inverse matrix calculation.

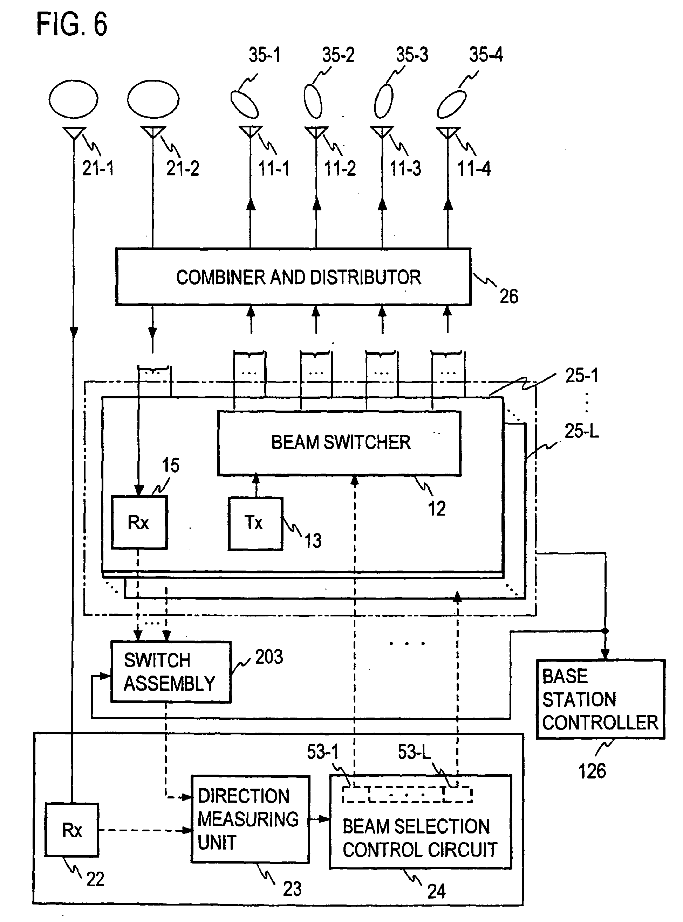

Where there exist a plurality of communication channels, an arrangement as shown in Fig. 6 is used where parts corresponding to those shown in Fig. 5A are designated by like reference characters as used before. What differs from the arrangement of Fig. 5A is only the addition of a plurality of transmitters/receivers 25-1 to 25-L each including a beam switcher 12, a transmitter 13 and a receiver 15, a combiner and distributor 26 and a switch assembly 203. Outputs corresponding to respective narrow angle beams of the beam switchers 12 of the transmitters/receivers 25-1 to 25-L are combined together in the combiner and distributor 26 to be fed to corresponding ones of the narrow angled antennas 11-1 to 11-4. A received signal from a wide angle antenna 21-2 is distributed by the combiner and distributor 26 to be fed to respective communication receivers 15 of the transmitters/receivers 25-1 to 25-L. The channel allocation which determines which channels are used by the respective transmitters/receivers 25-1 to 25-L for purpose of communication is controlled by a base station controller 126. The base station controller 126 repeats sequentially establishing the channel which is allocated to one of the transmitters/receivers 25-1 to 25-L in the direction finder receiver 22, and each time the channel is established therein, it derives the received signal from the communication receiver 15 of one of the transmitters/receivers 25-1 to 25-L for which this channel has been allocated by controlling the switch assembly 203 to be fed to the direction measuring unit 23. The beam selection control circuit 24 includes output parts 53-1 to 53-L in a manner corresponding to the respective transmitters/receivers 25-1 to 25-L. A result of measurement of the direction on which a mobile station with which each of the transmitters/receivers 25-1 to 25-L is in communication is located is stored in the output parts 53-1 to 53-L, and the measured direction which is stored in the output parts 53-1 to 53-L is fed to the beam switcher 12 of the respective transmitter/receiver 25-1 to 25-L.

The direction finder receiver 22 is arranged to operate in arbitrary channel in a time division manner, and the phase difference θ of its received signal with respect to the corresponding receiver 15 in one of the transmitters/receivers 25-1 to 25-L is determined in the direction measuring unit 23, thus estimating the arriving direction of the received radio wave. The beam selection control circuit 24 controls the beam switcher 12 in one of the transmitters/receivers 25-1 to 25-L for which the channel has been established, thus selecting the narrow angle beam for purpose of transmission. In this manner, as a mobile station which is in communication with one of the transmitters/receivers 25-1 to 25-L travels, the transmitted beam may be made to track the direction of that mobile station. The embodiments shown in Figs. 5A and 6 represent an arrangement in which the narrow angle antennas 11-1 to 11-4 form the narrow angle beam forming antenna assembly 205 and the wide angle antennas 21-2 form the wide angle beam forming antennas 26.

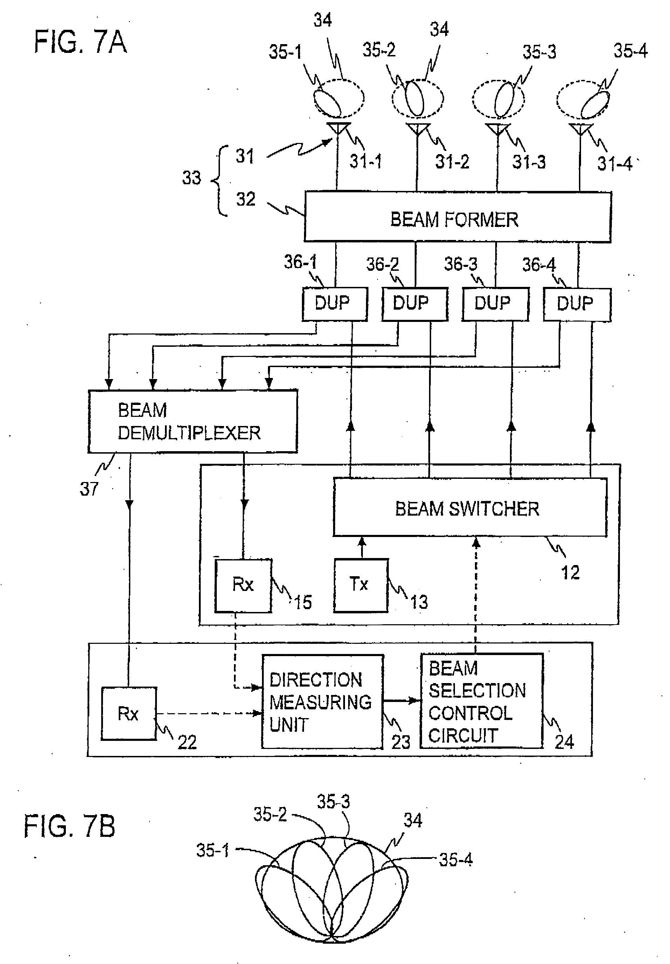

An example in which part of antennas which forms a plurality of narrow angle beams also serves as a wide angle beam antenna will now be described. This example is shown in Fig. 7A where a multi-beam antenna 33 is formed by an array antenna 31 including wide angle beam antenna elements 31-1 to 31-4 and a beam former 32 which may comprise Butler matrix, for example. The antenna elements 31-1 to 31-4 are arrayed at a spacing on the order of one-half the wavelength (λ) of the radio wave involved and each exhibit a wide angle directivity response (as indicated by a wide angle beam) 34 shown in broken lines in Fig. 7A. The multi-beam antenna 33 has a plurality of narrow angle directivity responses (narrow angle beams) 35-1 to 35-4 which are directed in mutually different directions. As shown in Fig. 7B, the service area of the wide angle beam 34 can be substantially covered by the narrow angle beams 35-1 to 35-4 collectively.

A switched output from the beam switcher 12 can be fed through duplexers 36-1 to 36-4, respectively, to any one of the four ports of the beam former 32. For example, when the four ports of the beam former 32 are fed from the duplexers 36-1 to 36-4, each input forms a transmitted wave as represented by one of the narrow angle beams 35-1 to 35-4. In this manner, the output from the duplexer 36-1 forms the transmitted wave corresponding to the narrow angle beam 35-1, for example.

A received output from the multi-beam antenna 33 (corresponding to a signal from the input port during the transmission) is fed through the duplexers 36-1 to 36-4 to a beam former 37 which may comprise Butler matrix, for example, to be converted back to the received signal according to the directivity response of the wide angle beam antenna elements 31-1 and 31-2, for example, or corresponding to the wide angle beam 34. One of the received signals corresponding to the antenna elements 31-1 and 31-2 is fed to the communication receiver 15 while the other is fed to the direction finder receiver 22. It is to be noted that a coordination is made so that channel information, synchronization information and/or channel estimation information which is received by the communication receiver 15 is also received by the direction finder receiver 22 under the same terms and conditions.

A spacing between the antenna elements 31-1 and 31-2 is on the order of one-half the wavelength or less, and accordingly, the arriving direction of the radio wave can be estimated by detecting the phase difference between the both received signals by the direction measuring unit 23, generally in the similar manner as described above in connection with Fig. 5A. Thus, an output from the transmitter 13 can be fed to the narrow angle beam which is oriented in this direction.

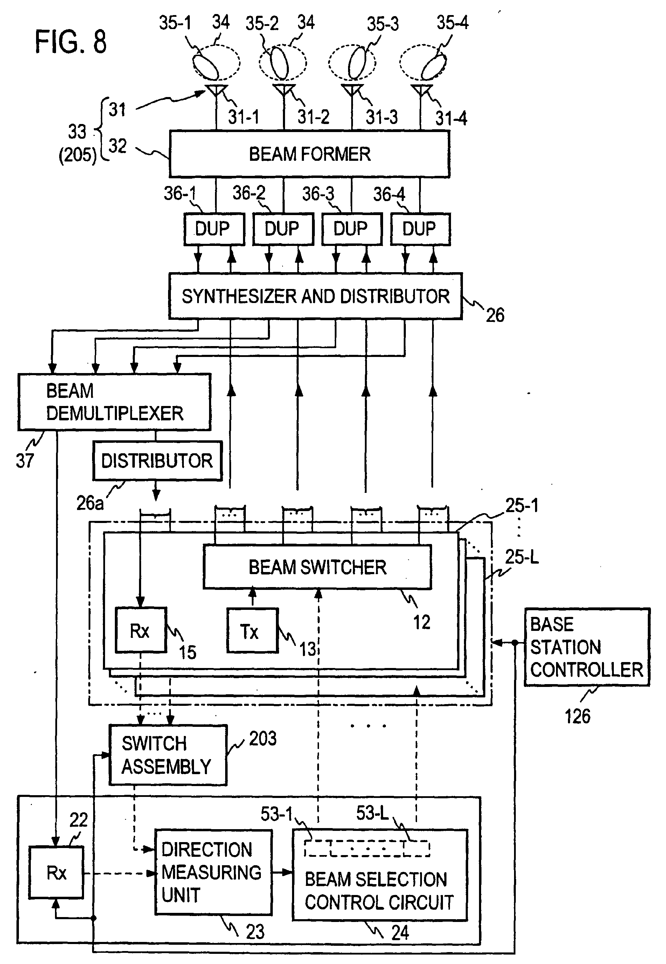

Where there are a plurality of communication channels, a resulting arrangement will be as shown in Fig. 8, and what differs from Fig. 7A is the addition of a plurality of transmitters/receivers 25-1 to 25-L each including a beam switcher 12, a transmitter 13 and a receiver 15, a combiner and distributor 26, a distributor 26a and a switch assembly 203. Corresponding outputs from the respective beam switchers 12 are combined in the combiner and distributor 26 to be fed to corresponding ones of the duplexers 36-1 to 36-4. Outputs from the beam former 37 which are to be fed to the communication receivers 15 are distributed by the distributor 26a to the communication receivers 15 of the respective transmitters/receivers 25-1 to 25-L.

The direction finder receiver 22 is arranged to operate in an arbitrary channel in a time division manner, and a phase difference between the received signal from the direction finder receiver 22 and the received signal from the communication receiver 15 for that channel is detected by a direction measuring unit 23, which selects and establishes a narrow angle beam to be used for the transmission from the transmitter 13 which forms a pair with this communication receiver 15. In this manner, as a mobile station which is in communication with one of the transmitters/receivers 25-1 to 25-L travels, it is possible to cause the transmitted beam to track the mobile station in the direction in which it travels. The embodiment shown in Figs. 7 and 8 represent an arrangement in which the multi-beam antenna 33 comprises a narrow angle beam forming antenna assembly 205 while the combination of the multi-beam antenna 33 and the beam former 37 forms the wide angle beam forming antenna assembly 206.

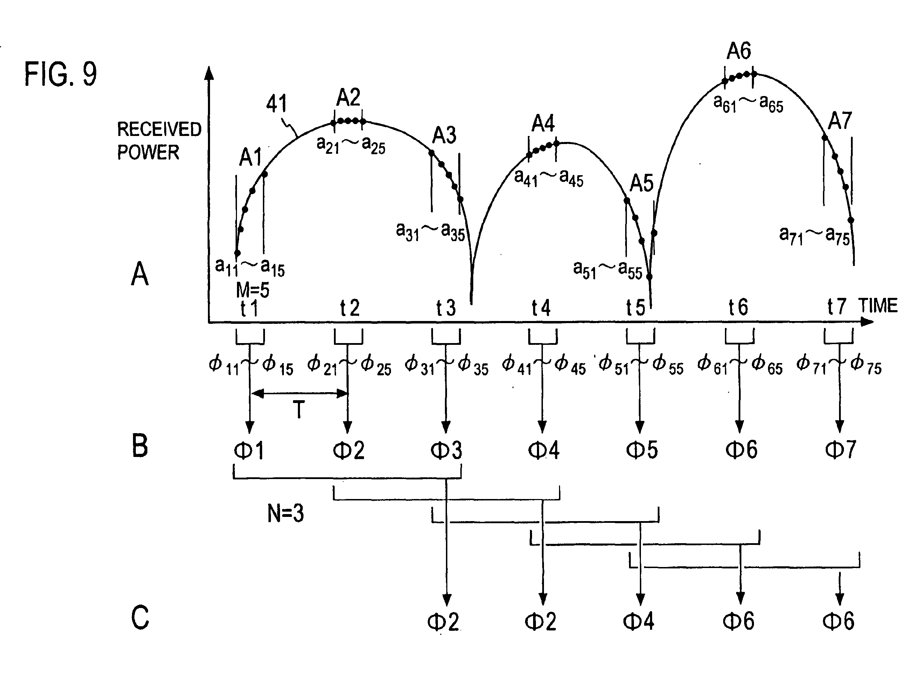

Preferred examples of the direction measuring unit 23 shown in Figs. 5 to 8 will now be described. The principle of operation for one example is shown in Fig. 9. A received signal which is input to the direction measuring unit 23 has a received power which undergoes a variation due to a fading effect or the like, as indicated by a curve 41 in Fig. 9A, for example. The determination of an i-th reliable measured direction Φi will be described. An instantaneous received power is measured a plurality of times (which are chosen to be N=five times in Fig. 9) at a time interval of T to determine values ai1 to aiM. A typical value is obtained as a mean power Ai of ai1 to aiM (Fig. 9A). At the same time, an instantaneous phase difference between the both received signals is measured to obtain an instantaneous measured direction φi1 to φiM, and a typical value is obtained as a mean measured direction Φi of φi1 to φiM (Fig. 9B). In this manner, a mean power and a mean measured direction are obtained as A1, A2, ···Φ1, Φ2,... at the time interval of T. A plurality of values (which are N=3 in Fig. 9) for the mean power and the mean measured direction are stored in a memory. By way of example, at time t3, it is determined that the reliable measured direction is the mean measured direction Φ2 which is obtained at time t2 when the maximum mean power A2 is obtained among the three stored mean powers A1, A2 and A3 in the memory (it will be noted that the mean power A2 at time t2 is greater than the remaining values A1 and A3). This memory is sequentially updated by new data in a first-in and first-out (FIFO) manner. Thus, at time t4, the mean power A1 and the mean direction Φ1 at time t1 are discarded while mean power A4 and mean direction Φ 4 which are obtained anew are stored. At time t4, the mean powers A2, A3 and A4 stored in the memory are compared against each other again, thus determining a new reliable direction according to the described algorithm (it will be seen that in Fig. 9, the reliable direction is determined to be Φ2). The time interval T and the number of data N which is used in determining the maximum are chosen such that the correlation between the mean powers is minimized. The fading structure which occurs is determined from the plurality of mean powers (which is N=3 in the present example) which are compared against each other, and a choice is made so that a mean direction which lies in a depression caused by the fading effect is not selected. By choosing the parameters T and N suitably, the selection of a measured direction which occurs during a depression in the received power where a large error is likely to occur as the reliable direction is avoided. In the example shown in Fig. 9, Φ5 is not selected as the reliable direction because the received mean power A5 is low. For each measurement which takes place at the time interval of T, a decision is rendered whether or not the reliable direction is to be updated on the basis of the mean powers obtained during past several measurements, (which is N=3 in Fig. 9). Fig. 9B shows the mean measured direction and Fig. 9C shows the reliable direction determined and the direction in which the determination has occurred.

As mentioned above, it is preferred that the time interval T between successive measurements be determined to provide a reduced correlation between the mean powers obtained so that the fading structure can be recognized from N received mean powers and so that a comparison between the received powers in a depression zone is avoided. It will be seen that a longer time interval is preferred for T, but when a longer time interval is chosen, an updating of the measured direction is slowed down in a corresponding manner, degrading the tracking capability for a mobile station which travels rapidly. It is preferred that the time interval T be chosen in accordance with the traveling speed of the mobile station or the period of the fading effect. The number N of the mean powers which are used in detecting the maximum mean power is preferably chosen to avoid a depression zone in the received power and to enable the fading structure to be recognized from the mean powers being compared. For these reasons, the number of mean powers is chosen in a range from 3 to 10. The mean powers are measured a plurality of times (M-times) at the time interval of T in order to reduce the influence of noises, and should be made a plurality of times as close to each other as possible. The number M of measurements may be on the order of 10 to 20, for example.

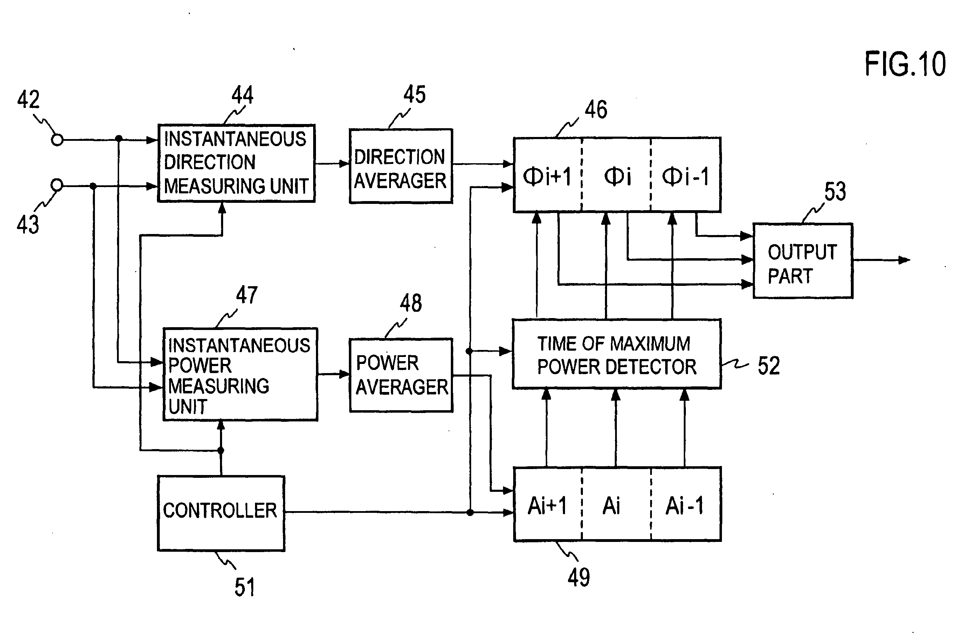

An exemplary functional arrangement which is used to determine the reliable direction is shown in Fig. 10. Both received signals which are input to a direction measuring unit 23 are applied to a pair of terminals 42 and 43 of an instantaneous direction measuring unit 44 where an instantaneous phase difference between the both received signals is measured a plurality of times (or M-times) to determine an instantaneous direction on the basis of the instantaneous phase difference. M values of the instantaneous measured direction are averaged in a direction averager 4, and a resulting mean direction is stored in a direction FIFO memory 46.

The received signals applied to the terminals 42 and 43 are also input to an instantaneous power measuring unit 47 where the instantaneous power is measured M-times, and M values of the instantaneous power are averaged in a power averager 48, and a resulting mean power is stored in a power FIFO memory 49. The measurement of the instantaneous power may take place with respect to only one of the received signals applied to the terminals 42 and 43, or may take place with respect to a sum or a mean value thereof. A controller 51 operates the instantaneous direction measuring unit 44 and the instantaneous power measuring unit 47 at the time interval of T, and the outputs from the direction averager 45 and the power averager 48 are stored in the direction FIFO memory 46 and the power FIFO memory 49, respectively. The time of measurement when a maximum one of the mean powers which are stored in the power FIFO memory 49 is obtained is detected by a maximum power time detector 52, and the mean direction which prevails at this point in time is read out from the direction FIFO memory 46 to be delivered as the reliable direction from an output part 53, and as an output representing the measured direction determined by the direction measuring unit 23.

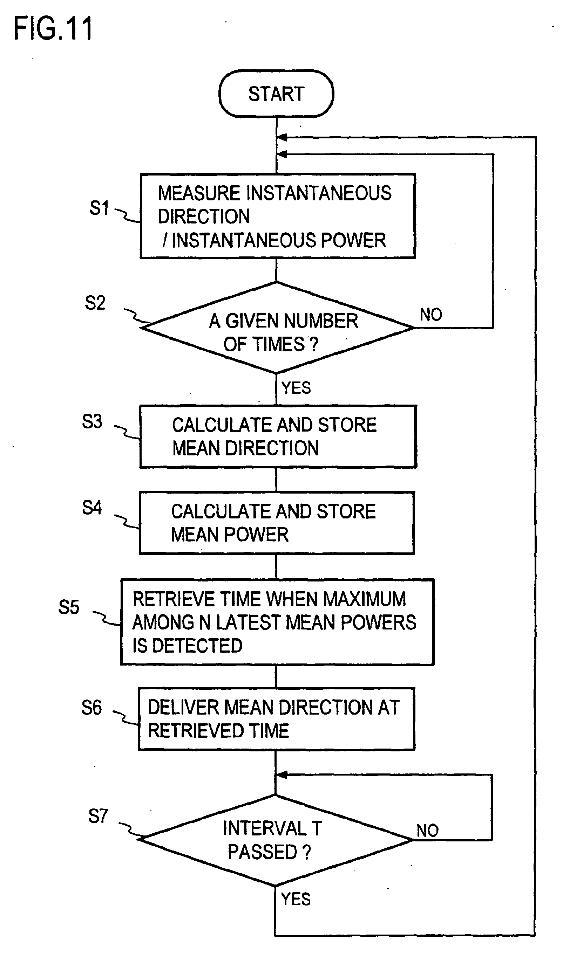

Fig. 11 shows a processing procedure which takes place in the arrangement of Fig. 10. Initially, the instantaneous direction and the instantaneous power are measured (S1). The measurement is repeated until the measurement takes place a given number of times M (S2). After the given number of measurements, a mean direction from M values of the instantaneous measured direction is calculated to be stored in the direction FIFO memory 46 (S3). A mean power of M values of the instantaneous measured power is calculated to be stored in the power FIFO memory 49 (S4). A point in time when a maximum one of M values of the mean power which are stored in the power FIFO memory 49 is retrieved (S5), and the mean direction which prevails at the retrieved point in time is read out from the direction FIFO memory 46 to be delivered as the reliable measured direction from the direction measuring unit 23 (S6). Then, the elapse of the time interval T is waited for, subsequently returning to step S1 (S7).

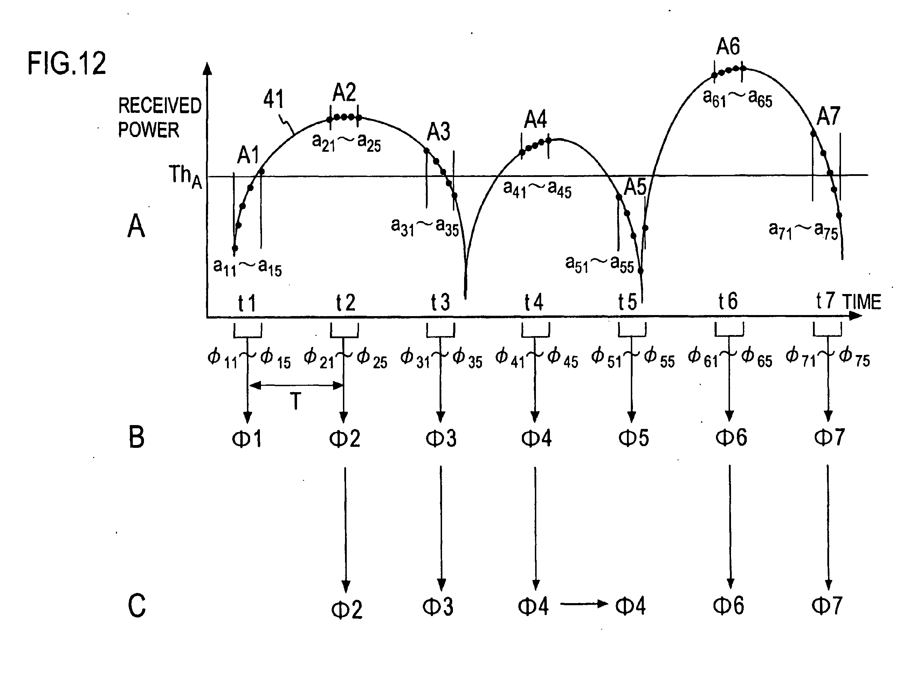

Another principle of operation for obtaining a reliable measured direction will now be described with reference to Fig. 12. The determination of an i-th reliable measured direction Φi will be described. The instantaneous received power is measured M times (which is equal to five times in Fig. 12) at the time interval of T to obtain values ai1 to aiM, and a typical value is obtained as a mean power Ai of ai1 to aiM (Fig. 12A). At the same time, an instantaneous measured direction φi1 to φiM is measured from the phase difference between the both received signals, and a typical value is obtained as a mean measured direction Φi of Φi1 to ΦiM (Fig. 12). The mean value and the mean measured direction are obtained at the time interval of T in this manner. Assume that a mean power M3 is obtained at time t3, and if A3 is greater than a threshold value Th_{A}, the mean measured direction Φ3 which prevails at time t3 is determined to be a reliable measured direction and is used to update an output measured direction, while if A3 is less than the threshold value Th_{A}, the measured direction is not updated. When the time interval T and the threshold value Th_{A} are suitably chosen, a measured direction which occurs during a depression in the received power where a large error in the measured direction is likely to occur cannot be selected as the reliable measured direction. By way of example, in Fig. 12, the mean received power A5 which prevails at time t5 is less than the threshold value Th_{A}, and thus, the mean measured direction Φ5 cannot be adopted as the reliable measured direction. Instead, the direction measuring unit 23 delivers an output of Φ4 at time t4, and does not deliver an output or again delivers Φ4 at time t5. In the example shown in Fig. 12, only those mean directions shown in Fig. 12C are delivered as the reliable measured direction.

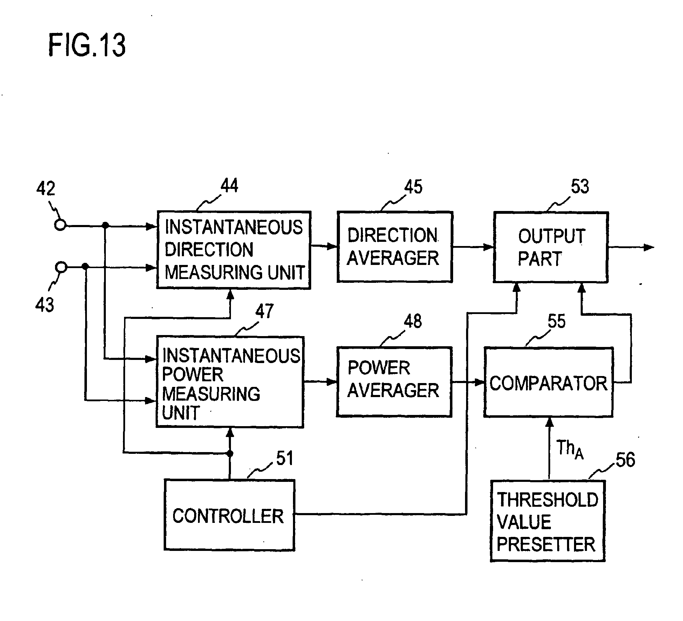

An exemplary functional arrangement for a direction measuring unit 23 which should operate to carry out the principle of operation mentioned above is shown in Fig. 13 where the parts corresponding to those shown in Fig. 10 are designated by like reference characters as used before. The instantaneous direction is measured by an instantaneous direction measuring unit 44 M times, and a mean direction is calculated by a direction averager 45. The instantaneous power is measured M times by an instantaneous power measuring unit 47, and a mean power is calculated in a power averager 48. The mean power is compared against a threshold value Th_{A} fed from a threshold presetter 56 in a comparator 55. If it is equal to or greater than the threshold value Th_{A}, the mean direction delivered from the direction averager 45 is used to update the measured direction which is retained in an output part 53, whereby it is delivered as a reliable measured direction. If it is found in the comparator 55 that the mean power is less than the threshold value Th_{A}, the measured direction retained in the output part 53 is not updated.

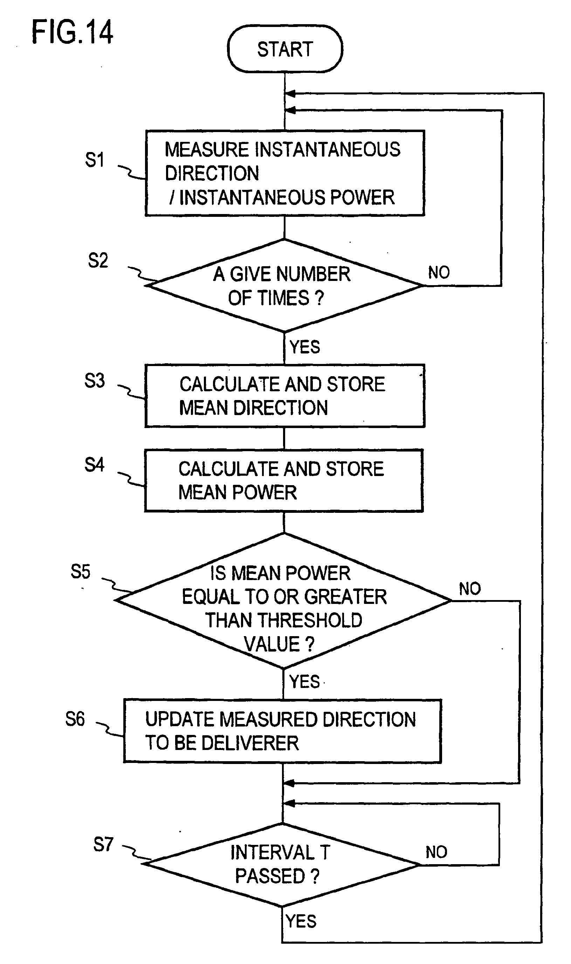

An exemplary processing procedure which is used for the arrangement shown in Fig. 13 is shown in Fig. 14. The instantaneous direction and the instantaneous power are measured a given number of times (M times) (S1 and S2). A mean direction for M values of the instantaneous direction and a mean power for M values of the instantaneous power are calculated (S3 and S4). An examination is made to see if the mean power is equal to or greater than the threshold value Th_{A} (S5), and if the mean power is equal to or greater than Th_{A}, the output measured direction is updated (S6) while if the mean power is less than Th_{A}, the output measured direction is not updated, thus waiting for the time interval T to pass, whereupon the operation returns to step S1 (S7).

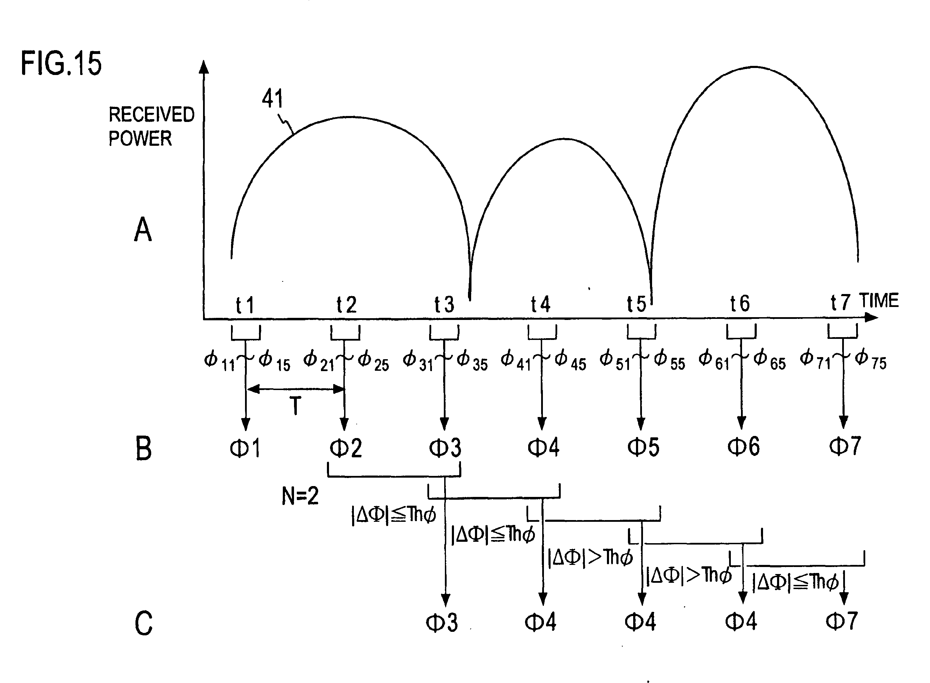

A further principle of operation for obtaining a reliable measured direction is illustrated in Fig. 15. The determination of an i-th reliable direction Φi will be described. The instantaneous measured direction is measured M times (which is equal to five times in Fig. 15) at the time interval of T to obtain values φi1 to φiM, and a typical value is obtained as a mean measured direction Φi of Φi1 to ΦiM (Fig. 15B). A plurality of mean measured directions (which is assumed to be N=2 in this example) are stored in a memory. At time t3, a mean measured direction Φ3 is obtained and is stored in a memory. A difference between Φ3 and a mean measured direction Φ2 for two values stored in a memory or |ΔΦ|=| Φi - Φi - 1| is then calculated. If the difference |ΔΦ| is less than a threshold value Thφ, the mean measured direction Φ3 which is now obtained, is determined to be a reliable measured direction. The memory is sequentially updated in a first-in and first-out manner. For example, at time t4, the mean measured direction Φ2 obtained at time t2 is discarded from a memory while a new mean measured direction Φ4 is stored. At time t4, the difference between the two mean measured directions Φ3 and Φ4 in the memory is obtained, and the difference |ΔΦ| is compared against the threshold value Thφ. In this example, |ΔΦ| < Thφ, and accordingly the output measured direction is updated to Φ4 (Fig. 15C). By suitably choosing the time interval T and the threshold value Thφ for the difference of the mean measured direction, a mean measured direction which occurs during a depression in the received power where a large error in the measured direction is likely to occur cannot be adopted as a reliable measured direction. In the present example, the mean measured direction Φ5 obtained at time t5 occurs for a low received level A5, and a difference over the mean measured direction Φ4 increases to cause |ΔΦ| to exceed the threshold value Thφ, whereby it cannot be adopted as the reliable measure direction, as indicated in Fig. 15C.

It is to be noted that when the received power is low, a mean phase difference increases or the mean phase difference increases as a result of the received power being buried into the noise.

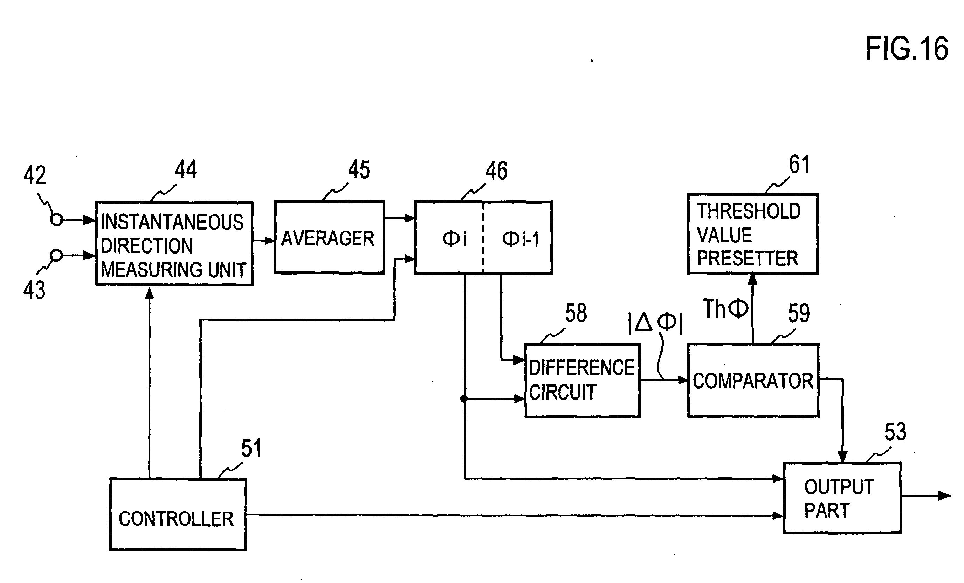

An exemplary functional arrangement of this direction measuring unit 23 is shown in Fig. 16 where parts corresponding to those shown in Fig. 10 are designated by like reference characters as used before. An instantaneous direction is measured from the phase difference between the both received signals by an instantaneous direction measuring unit 44 M times at a time interval of T. Resulting M values of the instantaneous measured direction is averaged in an averager 45 to be stored in an FIFO memory 46. The difference |ΔΦ| between the two mean measured directions contained in the FIFO memory 46 is calculated by a difference circuit 58, and the difference |ΔΦ| is compared against the threshold value Thφ supplied from a threshold presetter 61 in a comparator 59. If |ΔΦ|≤Thφ holds, the mean measured direction φi which is then stored in the memory 46 is used to update the measured direction which is retained by an output part 53. On the contrary, if |ΔΦ|>Thφ, the output part 53 is not updated.

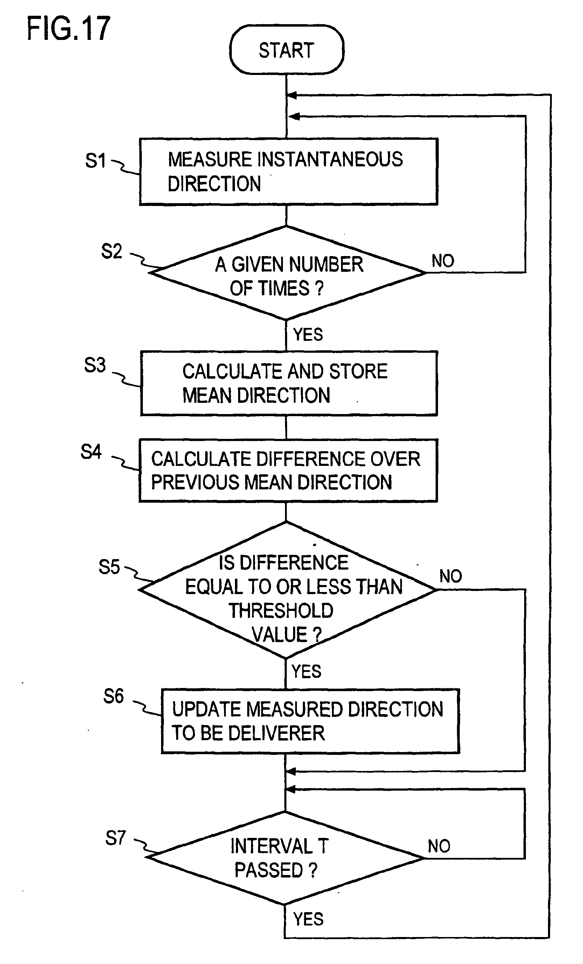

An exemplary processing procedure which is used with the arrangement shown in Fig. 16 is shown in Fig. 17. An instantaneous direction is measured on the basis of a phase difference between both received signals a given number of times (M times) (S1 and S2). M values of the instantaneous measured direction are averaged to be stored in a memory (S3). A difference |ΔΦ| between the current and the previous mean measured value is calculated (S4), and an examination is made to see if |ΔΦ| is equal to or less than the threshold value Thφ (S5). If |ΔΦ|≤Thφ, the measured direction from the output part 53 is updated by the latest mean measured direction. If |ΔΦ|≤Thφ does not hold, the measured direction retained in the output part 53 is not updated, but the elapse of the time interval T is waited for, whereupon the operation returns to step S1 (S7).

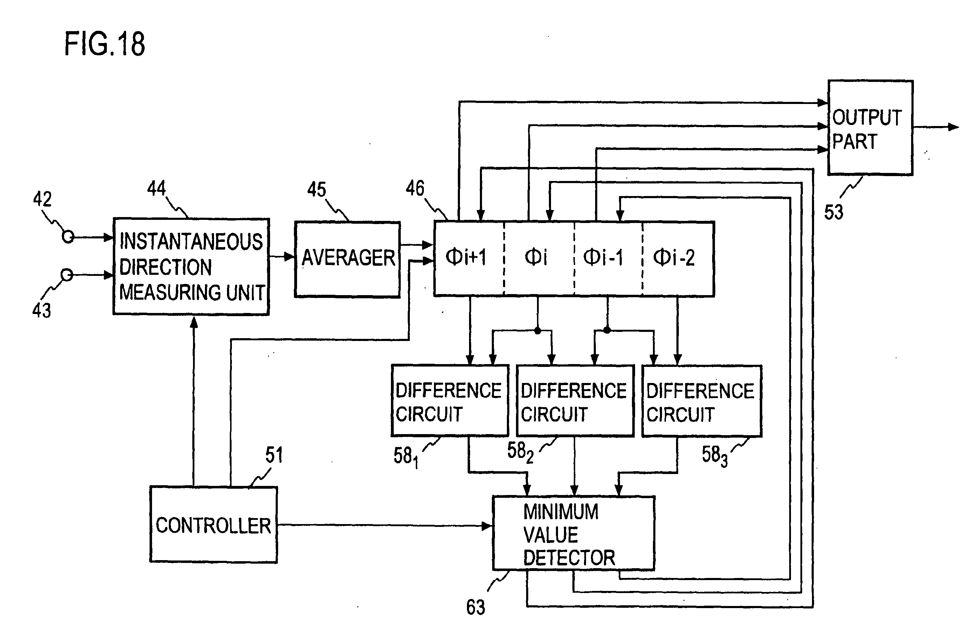

An additional functional arrangement for the direction measuring unit 23 which obtains a reliable measured direction is shown in Fig. 18 where parts corresponding to those shown in Fig. 16 are designated by like reference characters as used before. The instantaneous direction is measured M times by an instantaneous direction measuring unit 44 at time interval of T, and M values of the instantaneous measured direction are averaged in an averager 45 to be stored in a FIFO memory 46. Thus, the FIFO memory 46 stores four latest mean measured directions Φi+1, Φi, Φi-1 and Φi-2, for example, thus storing a time sequence of four latest values of the mean measured direction.

Differences between each pair of adjacent mean measured directions in the time sequence are calculated by difference circuits 58₁, 58₂ and 58₃. A minimum one of these differences |ΔΦ₁|=|(Φi+1)-Φi|, |ΔΦ₂|=|Φi(Φi-1)| and |ΔΦ₃|=|(Φi-1)-(Φi-2)| is detected by a minimum value detector 63. One of the two mean measured directions which are used in forming the difference having the minimum value is chosen as a reliable measured direction, and thus is read out from the FIFO memory 46 to be delivered to an output part 53. For example, if the output difference |ΔΦ₂| from the difference circuit 58₂ is a minimum value, one of the mean measured directions Φi and Φi-1 which are used in deriving the difference, preferably the latest one Φi, is read out from the memory 46 to be delivered to the output part 53. Alternatively Φi-1 may also be delivered.

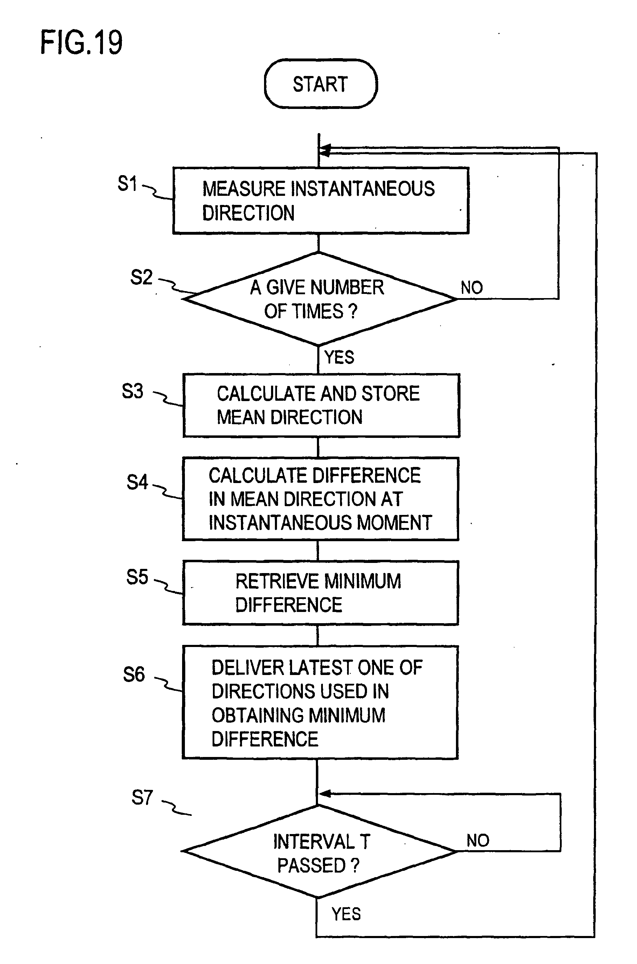

An exemplary processing procedure which is used with the arrangement shown in Fig. 18 is shown in Fig. 19. The instantaneous measured direction is measured M times (S1 and S2), and M values of the instantaneous direction is averaged to be stored in the FIFO memory 46 (S3). Differences (absolute values) between each pair of adjacent mean measured directions in the time sequence stored in the FIFO memory 46 are calculated (S4), and a minimum one of these differences is located. A latest one Φi of the two mean measured directions Φi and Φi-1 which are used in reaching the difference of the minimum value is delivered as a measured direction (S6). Subsequently, the operation returns to step S1 after waiting for the time interval T to pass (S7). Alternatively, Φi-1 may be delivered at step S6.

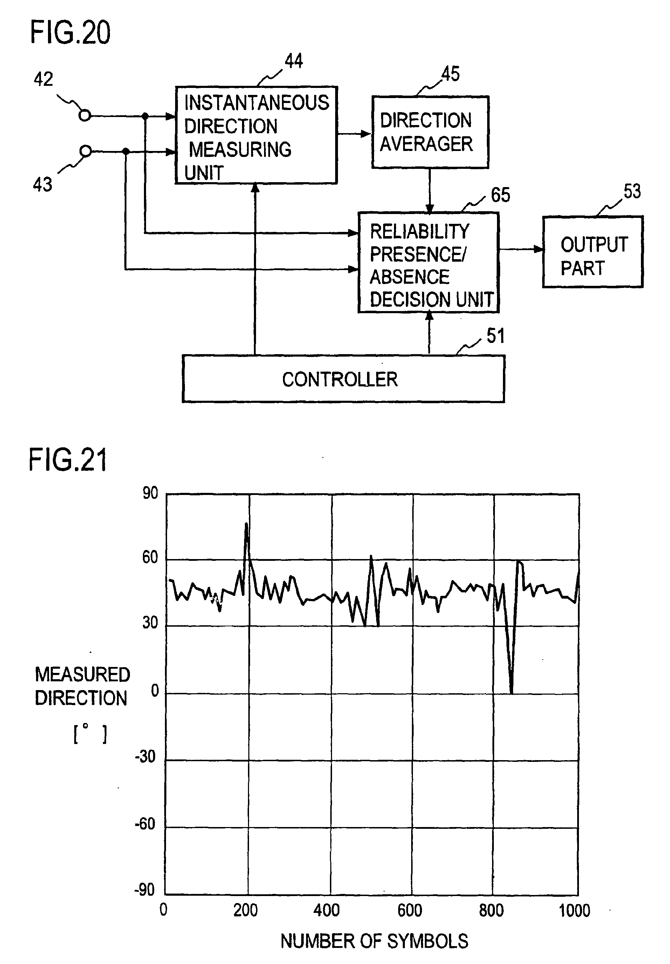

As discussed above for various embodiments, the direction measuring unit 23 is designed to be controlled by a controller 51, as shown in Fig. 20, such that an instantaneous direction measuring unit 44 measures an instantaneous phase difference between both received signals to determine an instantaneous direction on the basis of such phase difference, the measurement of the instantaneous direction is preferably repeated a plurality of times and a mean value of the plurality of instantaneous directions is obtained in a direction averager 45. Alternatively, the instantaneous phase difference is measured a plurality of times and a mean value over these instantaneous phase differences is determined, and a mean direction may be determined on the basis of the mean phase difference. In a reliability presence/absence decision unit 65, the presence or absence of the reliability in the mean direction is determined according to one of the techniques illustrated in Figs. 9 to 19, and the direction which has been determined to be reliable is delivered to an output part 53 as a measured direction. In the embodiments shown in Figs. 9 and 12, the instantaneous power of received signals has been measured, but alternatively, the instantaneous amplitude of the received signals may be measured.

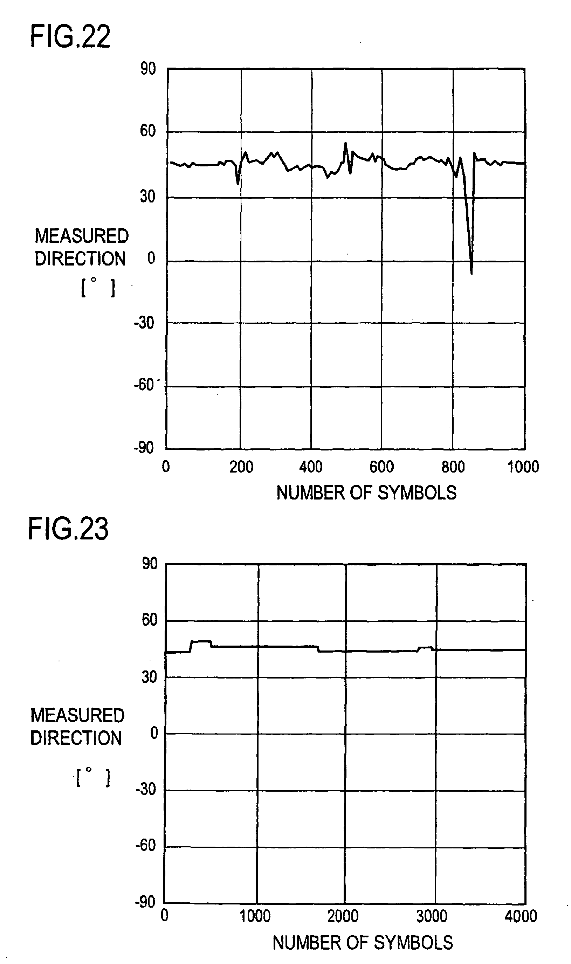

As an example, Fig. 21 shows a result of experiments which determined a measured direction by the instantaneous direction measuring unit 44. In Fig. 21, the abscissa represents time in terms of the number of symbols, and the ordinate represents the measured direction. In the example shown, the actual arriving direction of the radio wave is equal to 45°. However, it will be noted that the result of experiments shown indicates the presence of a significant variation in the measured direction. It is believed that this is partly because the measured direction cannot remain constant, but undergoes a large variation under the influence of receiver noises. For this reason, values of the instantaneous measured direction which are obtained by M=10 repetitions are averaged in order to suppress the influence of noises. In this instance, a result of experiments for the mean measured direction or the output from the direction averager 45 for the received signals which are under the same conditions as for Fig. 21 is as shown in Fig. 22. It will be seen from the results shown in Fig. 22 that a variation in the measured direction can be reduced by averaging values of the instantaneous measured direction. However, Fig. 22 shows that there still remains a large variation which cannot be suppressed even after the averaging operation. It is believed that this is due to a substantial reduction in the received power, namely during a deep depression in the received power or due to a depression caused by a fading effect when the arriving radio wave has an extended spatial reach.

By contrast, when the techniques illustrated in Figs. 11, 14, 17 and 19 are used to determine and deliver a reliable measured direction, experiments conducted for received signals of the same conditions indicate a result as shown in Fig. 23 for each of these techniques where there is no rapid variation or there is no large error, and the actual arriving direction of 45° is obtained in a fairly stabilized manner. The experiments have been conducted with M=10 and N=8. It is seen from such result that the techniques illustrated in Figs. 11, 14, 17 and 19 allow a stabilized measured direction to be obtained while reducing the probability that a mean measured direction which is obtained during a substantial depression in a received power is determined to be reliable, thus providing noise resistance as well as interference resistance.

In the above description, the measured direction which is retained in the output part 53 of direction measuring unit 23 is updated. However, rather than retaining the measured direction in the output part 53, information may be retained in the beam selection control circuit 24 and may be updated by an output from the output part 53.

Referring back to Fig. 5B, when the output from one of the receivers 15 and 22, for example, receiver 22, is inverted in polarity in a polarity inverter 231, as indicated in broken lines, the amount of control which must be applied to the variable phase shifter 201 can be reduced. The direction measuring unit 23 may determine the arriving angle on the basis of an output level of a phase difference between those received signals which is detected by an analog phase difference detection circuit. It is necessary to invert the polarity of one of the both received signals in order to achieve the response as shown in Fig. 5B in this instance. A phase difference between both received signals can be determined by converting each received signal into a complex digital signal and determining the phase of each received signal to derive a difference therebetween. It is to be note that the relationship between the phase difference and the arriving angle need not be as illustrated by the relationship shown in Fig. 5B. In other words, a phase difference between both received signals can be determined without inverting the polarity of one of the both received signals. In this instance, the phase difference θ is equal to 0 for the arriving angle of 0° in a direction of the perpendicular.

It is to be understood that despite the above description, the number of narrow angle beams is not limited to four, but any desired number of beams may be used. The function of the direction measuring unit 23 can be served by causing a computer to execute a program.

As discussed above, according to the first aspect of the present invention, one of received signals from a pair of received wide angle beams is fed to a communication receiver while the other is fed to a direction finder receiver. By measuring a phase difference between signals from these receivers, the arriving direction of the received radio wave is detected. By controlling a beam switcher so that an output from a transmitter is fed to one of a plurality of transmitting narrow angle beams, the transmitting power can be reduced (due to a high gain of the antenna) and the interference can be reduced (due to the narrow angle beam). In addition, the arriving direction of the radio wave can be detected by simple means of detecting a phase difference. Because the transmitting narrow angle beam is switched in accordance with a change in the arriving direction of a received signal from a mobile station, it is possible to allow the transmitting narrow angle beam to substantially track the direction of the mobile station. A single direction finder receiver is used for purpose of finding the arriving direction of a received radio wave while utilizing other communication receivers for the purpose of finding the direction. As a consequence, the entire arrangement is greatly simplified as compared with the arrangement shown in Fig. 2. In particular, as shown in Figs. 6 and 8, a single direction finder receiver can be used with transmitters/receivers for a plurality of communication channels.

When a reliable measured direction is determined, it is possible to direct a transmitting narrow angle beam always accurately without failure.

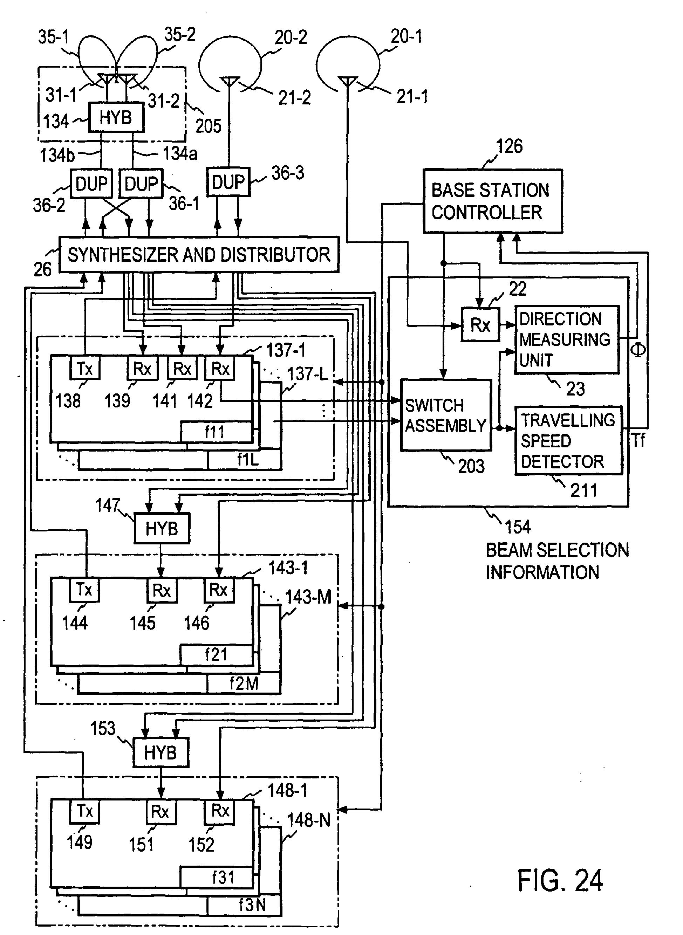

Fig. 24 shows an embodiment according to a second aspect of the present invention. In this instance, a pair of 60° beam (narrow angle beam) forming antenna assemblies 205 cover a 120° sector service area and a 120° beam (wide angle beam) antenna 21-2 covers the 120° sector service area while a combination of antennas 31-1 and 31-2 of the narrow angle beam forming antennas assembly 205 and the antennas 21-2 enables a diversity reception. The antennas 31-1 and 31-2 are connected through a hybrid 134 and through duplexers 36-1 and 36-2 to a combiner and distributor 26 while the 120° beam antenna 21-2 is connected through a duplexer 36-3 to the combiner and distributor 26. As viewed toward the antennas 31-1 and 31-2 from ports 134a and 134b of the hybrid 134 where it is connected to the duplexers 36-1 and 36-2, respectively, each of the principle beams 35-1 and 35-2 of the combined directivity response has a beam width of 60° and are directed to the left and to the right, respectively, while the antenna 21-2 has a wide angle beam 20-2 having a beam width of 120°, substantially covering the narrow angle beams 35-1 and 35-2. In this manner, the combination of the antennas 31-1 and 31-2 and the hybrid 134 constitute the narrow angle beam forming assembly 205 which forms the pair of 60° beams (narrow angle beams) 35-1 and 35-2.

Each of transmitters/receivers 137-1 to 137-L for channels f11 to f1L inclusive of control and communication channels includes a transmitter 138 which can feed transmitting power directly to the 120° beam (wide angle beam) antenna 21-2 through the combiner and distributor 26 and the duplexer 36-3, receivers 139 and 141, each of which can be fed with a received signal from each 60° beam port of the hybrid 134 through the combiner and distributor 26 and the duplexers 36-2 or 36-1, and a receiver 142 which can be fed with a received signal from the 120° beam antenna 21-2 through the combiner and distributor 26 and the duplexer 36-3.

Each of the communication channel transmitters/receivers 143-1 to 143-L for channels f21 to f2M includes a transmitter 144 which can feed a transmitting power to the 60° beam port 134a of the hybrid 134 through the combiner and distributor 26 and the duplexer 36-1, a receiver 145 which can be fed with a received signal from the both 60° beam ports 134a and 134b of the hybrid 134 through the hybrid 147, the combiner and distributor 26 and the duplexers 36-1 or 36-2, and a receiver 146 which can be fed with a received signal from the 120° beam antenna 21-2 through the combiner and distributor 26 and the duplexer 36-3.

Each of communication channel transmitters/receivers 148-1 to 148-M for channels f31 to f3M includes a transmitter 149 which can feed transmitting power to the 60° beam port 134b of the hybrid 134 through the combiner and distributor 26 and the duplexer 36-2, a receiver 151 which can be fed with a received signal from either 60° beam port 134a or 134b of the hybrid 134 through the combiner and distributor 26 and the duplexer 36-1 or 36-2, and a receiver 152 which can be fed with a received signal from the 120° beam antenna 21-2 through the combiner and distributor 26 and the duplexer 36-3. -

Another wide angle beam antenna 21-1 which covers the service area in the similar manner as the wide angle beam antenna 21-2 is disposed close thereto within a distance of one-half the wavelength and is directed in the same beam direction. A received signal from the antenna 21-1 is received by a receiver 22.

A received output from a control channel receiver 142 is fed to a beam selection information detection system 154, which obtains direction information Φ as both received signals from the receiver 142 and the receiver 22 are fed to a direction measuring unit 23 which is responsive thereto to determine whether the direction on which a mobile station, which provided the received signals, is located in the direction of the 60° beam 35-1 or in the direction of the 60° beam 35-2, and also obtains information Tf representing the traveling speed of the mobile station which is derived by a traveling speed detector 211 on the basis of a variation in the reception level of the receiver 142 or fading pitch Tf. It is to be noted that any one of various direction measuring units mentioned above can be used for the direction measuring unit 23 of this embodiment. As described above in connection with the embodiment of Fig. 6, a base station controller 126 controls a switch assembly 203 so that the received signal from the receiver 142 of one of the transmitters/receivers 137-1 to 137-L be fed to the direction measuring unit 23 and the traveling speed detector 211, and also controls the receiver 22 to establish a channel therein.

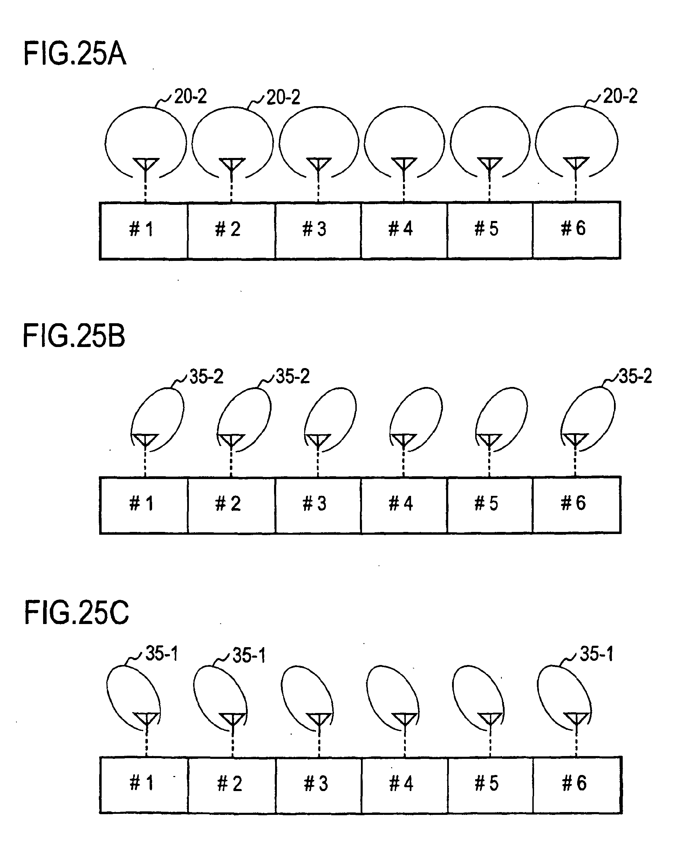

The total time slots of the 120° beam control and communication channel transmitters/receivers 137-1 to 137-L are in the 120° beam (wide angle beam) 20-2, as shown in Fig. 25A. The time slots of the 60° beam communication channel transmitters/receivers 143-1 to 143-M are assigned to the right beam (narrow angle beam) 35-2 as shown in Fig. 25B while time slots of the 60° beam communication channel transmitters/receivers 148-1 to 148-N are assigned to the left beam (narrow angle beam) 35-1 as shown in Fig. 25C. The operation will now be described.

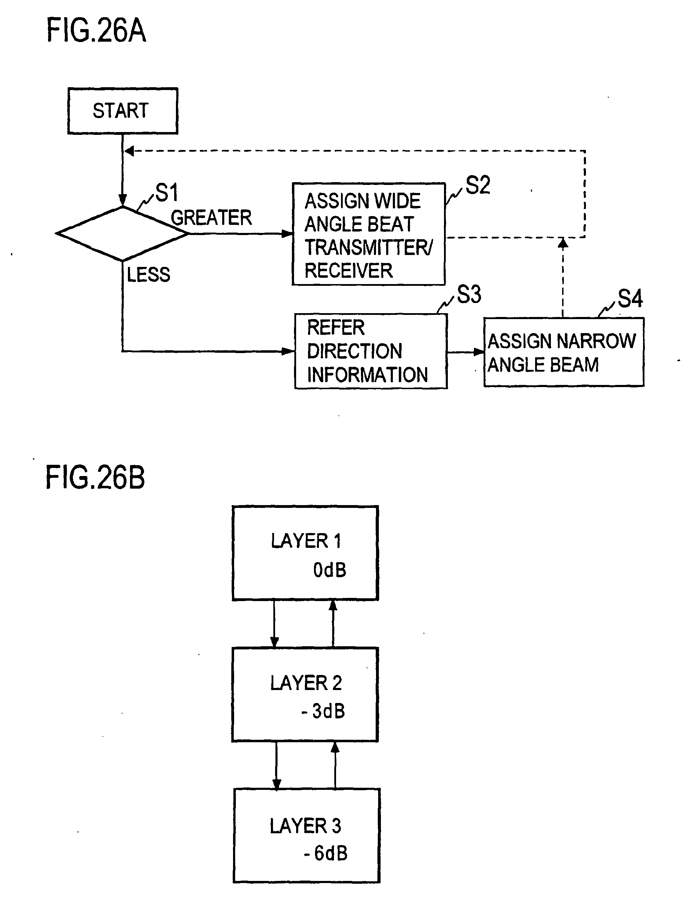

The base station controller 126 interrogates the beam selection information detection system 154 for the traveling speed information (fading pitch Tf) and beam (direction) information Φ when it assigns a communication channel as during a call request or termination. In response to the response information Tf and Φ, the base station controller 126 operates in a manner shown in Fig. 26A. If Tf is greater than a given value, it is determined that a mobile station is in the course of rapidly traveling and thus one of the transmitters/receivers 137-1 to 137-L having a communication channel in the 120° beam (wide angle beam) is assigned for the intended communication (S2). On the other hand, if it is found at step S1 that Tf is less than the given value, it is determined that the mobile station remains stationary or is moving slowly, and a reference is made to the direction information Φ (S3) and one from either the transmitters/receivers 143-1 to 143-M or 148-1 to 148-N having a communication channel in the 60° beam (narrow angle beam) which includes the referred direction in its service area is assigned (S4). Because the transmitters/receivers 143-1 to 143-M or 148-1 to 148-N are assigned to a communication with a mobile station, for which the traveling speed is determined to be slow, the probability that a channel switching operation occurs during the communication with this mobile station is low. Accordingly, the beam selection information detection system 154 is not connected to the transmitters/receivers 143-1 to 143-M or 148-1 to 148-N. However, as indicated by broken lines in Fig. 26A, the beam selection information detection system 154 may be connected to the transmitters/receivers 143-1 to 143-M and 148-1 to 148-N so that subsequent to the completion of the steps S2 and S4, the operation may return to step S 1 where the traveling speed may be detected to switch between a wide angle beam transmitter/receiver and a narrow angle beam transmitter/receiver in an adaptive manner.

It is possible to suppress the beam division loss to the lowest possible limit by adaptively choosing the relative proportions of the numbers of the transmitters/receivers 137-1 to 137-L, 143-1 to 143-M and 148-1 to 148-N depending on the traffic and the distribution of the traveling speeds. In the present embodiment, the transmitting beam comprises a 120° beam and a pair of 60° beams, but it is also possible to use a 120° beam and a pair of 60° beams for the receiving beam in the similar manner as for the transmitting beam. It will be noted that in Fig. 24, the hybrids 147 and 153 are used to form a 120° beam for reception. The transmitters/receivers 143-1 to 143-M and 148-1 to 148-N which use 60° beam are capable of transmitting with a high gain antenna, and accordingly use a transmitting power which is 3 dB lower than the transmitting power used with the 120° beam transmitters/receivers 137-1 to 137-L. As shown in Fig. 26B, the transmitting power can be reduced by increasing the layers used such as a coverage of the service area by the 120° beam (layer 1), a coverage of the service area by the pair of 60° beams and a coverage of the service area by narrower beams such as four 30° beams (layer 3). In the arrangement of Fig. 26B, the transmitting power may choose 0 dB for the layer 1, -3 dB for the layer 2 and -6 dB for the layer 3.

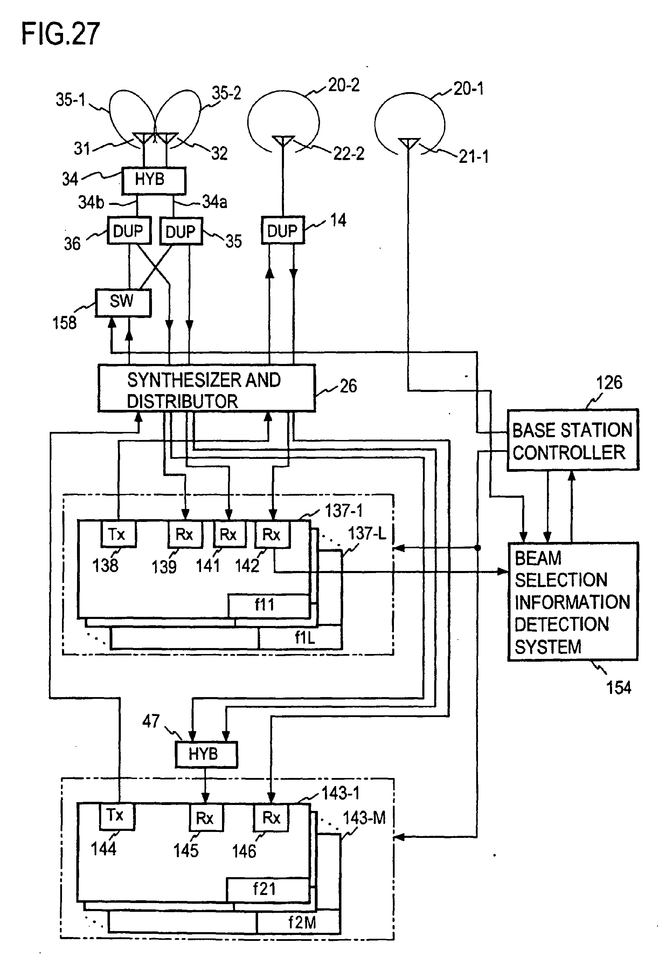

As an alternative, one of 60° communication channel transmitters/receivers shown in Fig. 24, namely, 148-1 to 148-N, may be omitted and the transmitter 144 of the remaining 60° communication channel transmitters/receivers 143-1 to 143-M may feed a transmitting power to the 60° beam ports 134a and 134b in a switched manner. Such an arrangement is shown in Fig. 27. Each transmitter 144 can be switchably connected to the 60° beam ports 134a and 134b through a switch 158 and through the combiner and distributor 26.

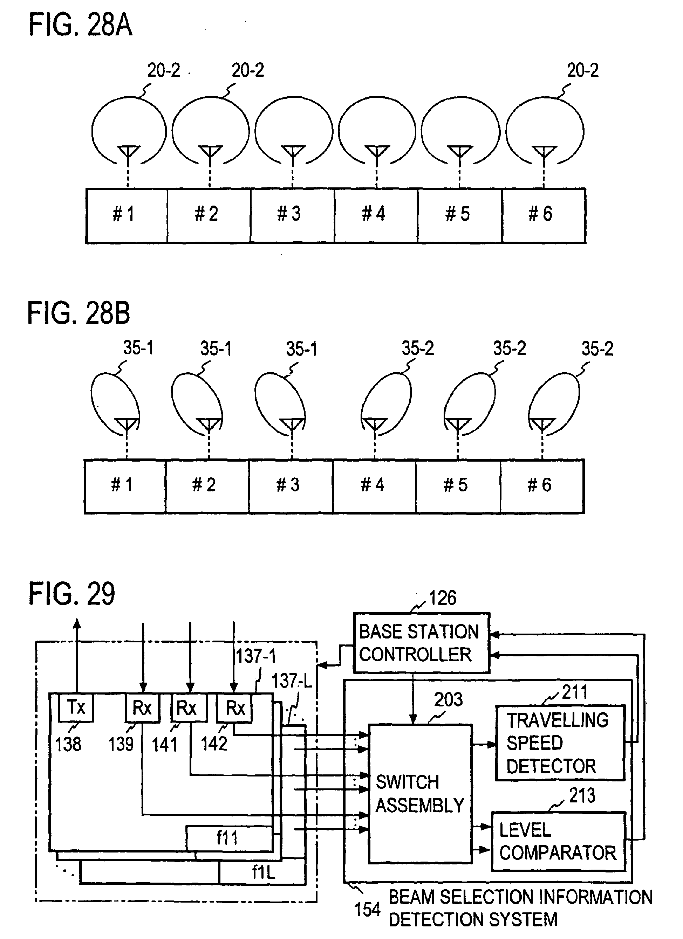

The total time slots of 120° beam control and communication channel transmitters/receivers 137-1 to 137-L are in the 120° beam 20-2, as shown in Fig. 28A while the time slots of the 60° communication channel transmitters/receivers 143-1 to 143-M are assigned to the left beam 35-1 for the first three slots and assigned to the right beam 35-2 for the second three slots, as shown in Fig. 28B. Its operation will be described below.

A base station controller 126 interrogates a beam selection information detection system 154 for the traveling speed information (fading pitch Tf) and the direction information Φ when assigning a communication channel as during a call request or termination. In response to such information, if Tf is greater than the given value, the base station controller 126 determines that a mobile station is rapidly traveling, and accordingly, assigns one of the transmitters/receivers 137-1 to 137-L having a communication channel in the 120° beam. On the other hand, if Tf is less than the given value, the controller determines that the mobile station remains stationary or slowly traveling, and thus assigns one of the transmitters/receivers 143-1 to 143-M having a 60° beam communication channel. During the process, the direction on which the mobile station is located is detected on the basis of a phase difference between received signals from the receiver 142 and the antenna 21-1, and a selection of either the right beam 35-2 or the left beam 35-1 is determined in accordance with such Φ information, and a corresponding time slot is assigned to this communication. The base station controller 126 switches a beam changing switch 158 in synchronism with the beam switching timing of the time slot. Because the transmitters/receivers 143-1 to 143-M are assigned only to a mobile station which has been determined to be traveling with a slow speed, the possibility that a channel switching operation occurs during the communication is low, and thus, the beam selection information detection system 154 is not connected to the transmitters/receivers 143-1 to 143-M.

Any one of the arrangements described above with reference to Figs. 5B and 9 to 20 may be used as the direction measuring unit 23 used within the beam selection information detection system 154 shown in Fig. 24.

In the embodiments shown in Figs. 24 and 27, the antenna 21-1 and the receiver 22 may be omitted, and a level comparator 213 shown in Fig. 29 may be used in place of the direction measuring unit 23 in the beam selection information detection system 154, thus determining the narrow angle beam which is directed on the direction on which a mobile station transmitting the received radio wave is located. Received signals from the receivers 139, 141 and 142 in the 120° beam control and communication channel transmitters/receivers 137-1 to 137-L are fed to the beam selection information detection system 154 including a switch assembly 203 where the received signal from the receivers 139, 141 and 142 of one of the transmitters/receivers 137-1 to 137-L are selected. Received signals from the receivers 139 and 141 are fed to the level comparator 213 where the levels of the both received signals are compared against each other. If the received signal level of the receiver 139 is greater than the received signal level from the receiver 141, it is determined that the mobile station is located in the service area of the narrow angle beam 35-2. On the contrary, if the received signal level from the receiver 141 is higher, it is determined that the mobile station is located in the service area of the narrow angle beam 35-1. Beam (direction) information indicating the narrow angle beam thus determined is delivered. In the event the traveling speed information of the mobile station remains below a given value, the base station controller 126 assigns one of the communication channel transmitters/receivers including a communication channel transmitter which feeds a transmitting power to the narrow angle beam which has been determined by the level comparator 213. When this technique is applied to the embodiment shown in Fig. 24, if the beam information indicated by the beam selection information detection system 154 indicates the narrow angle beam 35-1, one of the communication transmitters/receivers 143-1 to 143-M is assigned, and if the beam information indicates the narrow angle beam 35-2, one of the communication transmitters 148-1 to 148-N is assigned. When the beam selection information detection system 154 shown in Fig. 29 is used in the embodiment of Fig. 27, the base station controller 126 assigns one of the communication channel transmitters/receivers 143-1 to 143-M if the traveling speed is equal to or less than a given value, and assigns a time slot to the communication which is chosen in accordance with the relationship between the time slot and the narrow angle beam shown in Fig. 28B depending on the beam information from the level comparator 213, namely, whether it indicates the right beam 35-2 or the left beam 35-1.

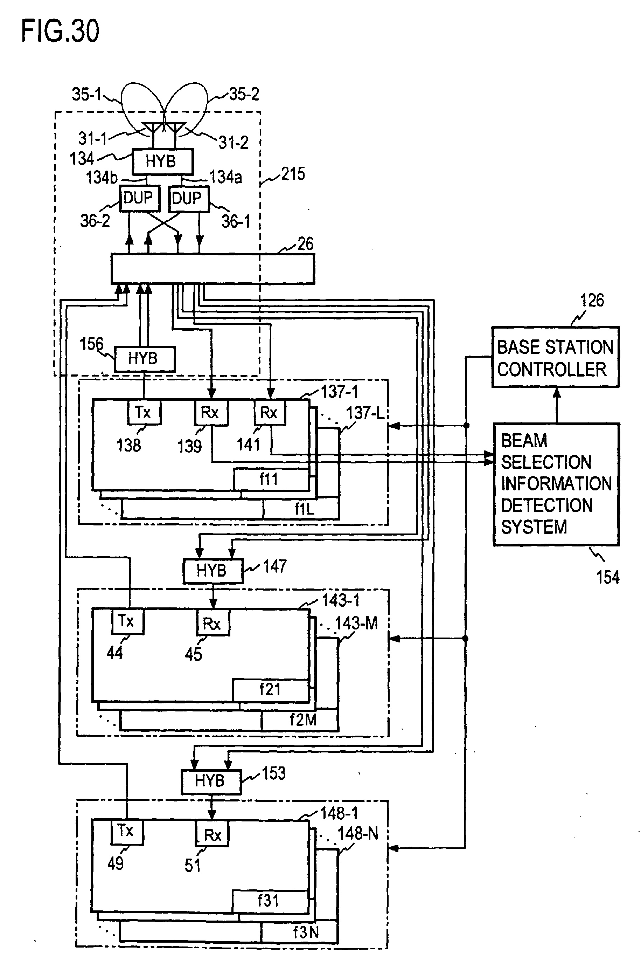

One embodiment which uses the beam selection information detection system 154 shown in Fig. 29, but in which the diversity arrangement is removed from the arrangement shown in Fig. 24 is shown in Fig. 30 where corresponding parts to those described before are designated by like reference characters. Specifically, in this embodiment, the 120° beam antennas 21-1 and 21-2, the duplexer 36-3 and the receivers 22, 142, 146 and 152 are omitted from the arrangement of Fig. 24. Each transmitter 38 in the 120° beam control and communication channel transmitters/receivers 137-1 to 137-L is capable of feeding a transmitting power to the both 60° beam ports 134a and 134b of the hybrid 134 through a hybrid 156, and through the combiner and distributor 26 and the duplexers 36-1 and 36-2, thus feeding transmitting power to the 120° beam (wide angle beam) antenna assembly 215. In other words, in addition to feeding transmitting power to (and receiving received signals from) a plurality of narrow angle beams 35-1 and 35-2, a plurality of narrow angle beam antennas 31-1 and 31-2 may be used to perform the transmission and the reception through a single wide angle beam.

In the arrangement shown in Fig. 27 also, the 120° beam antenna 21-1 and 21-2 may be omitted, and the beam selection information detection system 154 shown in Fig. 29 may be used to cause the pair of 60° beam antenna 31-1 and 31-2 to serve as the 120° beam antennas, in the similar manner as shown in Fig. 30.

The wide angle beam is not limited to 120° as described above, but may cover 360°, for example. Instead of covering a service area which is covered by a wide angle beam by a pair of narrow angle beams, three or more narrow angle beams may be used to cover the service area of the wide angle beam.

According to the second aspect of the present invention as described above, a narrow angle beam can be assigned to a mobile station which is traveling slowly, without irradiating unnecessary radio waves in directions other than the direction on which a desired mobile station is located. The transmitting power from the base station equipment can be reduced in a corresponding manner, and the interferences can also be reduced because a dispersion of radio waves can be suppressed.

## Claims

1. A mobile communication base station equipment including:
- a transmit antenna assembly (205) for forming a plurality of narrow angle beams (35-1 to 35-4) having directivity responses which are directed in different directions and collectively cover a certain service area;
- a communication transmitter (13);
- a beam switcher (12) connected between the communication transmitter (13) and the transmit antenna assembly (205) for selectively feeding transmitting power from the communication transmitter (13) to the plurality of narrow angle beams (35-1 to 35-4);
- a receive antenna assembly (21-1 to 21-2) for forming a plurality of beams (20-1 to 20-2); and
- a communication receiver (15) connected to the receive antenna assembly (21-1 to 21-2) for receiving signals from a mobile station and comprising;
-- a direction measuring unit (23) for measuring, on the basis of signals received by the receive antenna assembly (21-1 to 21-2), the direction in which the mobile station transmitting the received signals is located; and
-- a beam selection control circuit (24) for controlling the beam switcher (12) by feeding an output from the transmitter (13) to one of the plurality of narrow angle beams (35-1 to 35-4) in accordance with a measured direction;
**characterized in that:**
- the receive antenna assembly (21-1 to 21-2) is formed by a pair of receive antennas (21-1 to 21-2) forming wide angle beams (20-1 to 20-2) wherein each wide angle beam (20-1 to 20-2) covers said service area and wherein both receive antennas (21-1 to 21-2) are located close to each other so as to be within the order of one-half wavelength of radio waves involved, and wherein their wide angle beams (20-1 to 20-2) have central axes which are parallel to each other;
- one (21-2) of said receive antennas is connected to the communication receiver (15) and the other receive antenna (21-1) is connected to a direction finding receiver (22);
- a received signal from the communication receiver (15) and a received signal from the direction finding receiver (22) are input to the direction measuring unit (23) which determines the direction of the mobile station on the basis of a phase difference between both received signals, and
- a result of the measurement is input to the beam selection control circuit (24) which controls the beam switcher (12), thus feeding transmitting power from the communication transmitter (13) to one of the narrow angle transmit beams (11-1 to 11-4) whose direction is aligned with the determined direction.

2. The equipment according to Claim 1 in which there are provided N sets, where N is an integer equal to or greater than 2, of said beam switcher (12), said communication transmitter (13) and said communication receiver (15), further comprising
a combiner and distributor (26) for combining outputs from the communication transmitters (13), which are fed from said N beam switchers (12) in a manner corresponding to each of the narrow angle beams (35-1 to 35-4), and for distributing the received signal from said one receive antenna (21-2) to said N communication receivers (15); and
a switch assembly (203) for feeding the received signals from said N communication receivers (15) to the direction measuring unit (23) in a time division manner;
said beam selection control circuit (24) being operative to control the one of the beam switchers (12) that forms a pair with the communication receiver (15) which is used to determine the measured direction.

3. The equipment according to Claim 1 or 2 in which the transmit antenna assembly (205) comprises a plurality of narrow angle beam antennae each forming a respective one of said narrow angle beams (35-1 to 35-4).

4. The equipment according to Claim 1 or 2 in which the transmit antenna assembly comprises a multi-beam antenna (33) including an array antenna (31) having a plurality of antenna elements (31-1 to 31-4) each forming a wide angle beam an arranged at a spacing on the order of one-half the wavelength and a beam former (32) to define the plurality of narrow angle beams (35-1 to 35-4), and the receive antenna assembly comprises the multi-beam antenna, and a beam demultiplexer (37) which demultiplexes signals received by the multi-beam antenna (33) in the plurality of narrow angle beams (35-1 to 35-4) into two received signals, each of which has the directivity response of a respective one of two antenna elements (31-1, 31-2) in the array antenna (31).

5. The equipment according to any one of Claims 1-4 in which the direction measuring unit (23) comprises a direction measuring assembly (44, 45) for measuring said phase difference between both received signals to measure a direction, a reliability presence/absence decision unit (65) for determining the presence or absence of a reliability in the measured direction, and an output part (53) for delivering the measured direction which has been determined to be reliable by the reliability presence/absence decision unit (65).

6. The equipment according to Claim 5 in which the reliability presence/absence decision unit (65) comprises a magnitude measuring unit for measuring the magnitude of at least one of both received signals, a memory for storing the measured direction and the measured magnitude, and a maximum value detector for detecting a maximum one of a plurality of latest values of the measured magnitude to determine that the measured direction which is obtained when the detected maximum magnitude is measured as reliable.

7. The equipment according to Claim 5 in which the reliability presence/absence decision unit (65) comprises a magnitude measuring unit (47) for measuring the magnitude of at least one of both received signals, and a comparator (55) for determining whether or not the measured magnitude exceeds a threshold value and in the event the measured magnitude is determined to have exceeded the threshold value, determining the measured direction as reliable.

8. The equipment according to Claim 5 in which the reliability presence/absence decision unit (65) comprises a difference circuit (58) for determining a difference between the current measured direction and a previous measured direction, and a comparator (59) for determining whether or not the difference has exceeded a threshold value and in the event it is determined that the difference is equal to or less than the threshold value, determining the current measured direction as reliable.

9. The equipment according to Claim 5 in which the reliability presence/absence decision unit (65) comprises a memory (46) for storing the measured direction, a difference circuit (58₁, 58₂, 58₃) for determining the difference between adjacent measured directions in a time sequence of measured directions stored in the memory (46) inclusive of the latest measured direction, and a minimum value detector (63) for detecting a minimum one of the differences and determining one of the two measured directions as reliable that yield the minimum difference.

10. The equipment according to any one of Claims 5-9 in which the direction measuring unit (23) comprises a measuring unit (44) for measuring an instantaneous phase difference between both concurrent received signals a plurality of times, and an averager (45) for determining a mean measured direction corresponding to the plurality of values of the instantaneous phase difference and providing it as the measured direction.

11. The equipment according to Claim 6 or 7 in which the magnitude measuring unit comprises an instantaneous magnitude measuring unit for measuring an instantaneous magnitude of concurrent received signals a plurality of times, and an averager for averaging the plurality of values of the instantaneous magnitude to provide the measured magnitude.

12. The equipment of claim 1, including:
a plurality of wide angle beam communication channel transmitters/receivers (137-1 to 137-L) capable of feeding one of the beams of the receive antenna assembly (21-1 to 21-2), each of said plurality of wide angle beam communication channel transmitters/receivers including a receiver (142) identical to the communication receiver (15);
a plurality of narrow angle beam communication channel transmitters/receivers (143-1 to 143-L) each capable of feeding a respective one of said narrow angle beams of the transmit antenna assembly (205), each of said plurality of narrow angle beam communication channel transmitters/receivers including a transmitter (144) identical to the communication transmitter (13); and
a base station controller (126) for selectively assigning one from the wide angle beam communication channel transmitters/receivers or the narrow angle beam communication transmitters/receivers for a communication with a mobile station; and
a traveling speed detector (121) which is fed with one of both received signals for detecting information representing the traveling speed of the mobile station which is transmitting the received signal;
wherein the base station controller (126) is adapted to selectively assign one from the wide angle beam communication channel transmitters/receivers or the narrow angle beam communication transmitters/receivers on the basis of the detected traveling speed and the detected direction of the mobile station.

13. The equipment according to Claim 12 in which the base station equipment is of a time division multiple access communication system, the base station controller (126) including a switch assembly (203) which switches the narrow angle beam of the narrow angle beam communication channel transmitters/receivers in accordance with a time slot of the time division communication system, the base station controller (126) assigning a time slot which corresponds to the direction of the mobile station when assigning one of the narrow angle beam communication channel transmitters/receivers.

14. The equipment according to Claim 12 or 13 in which the direction measuring unit (23) comprises a reliability presence/absence decision unit (65) for determining the presence or absence of a reliability in the measured direction and for delivering the measured direction which is determined to be reliable.

## Patentansprüche

1. Mobilkommunikations-Basisstationsgerät, enthaltend:
- eine Sendeantennenanordnung (205) zum Bilden einer Vielzahl von schmalwinkligen Strahlen (35-1 bis 35-4), die Richtwirkungsverhalten haben, welches in unterschiedliche Richtungen gerichtet ist, und gemeinsam einen bestimmten Versorgungsbereich abdecken;
- einen Kommunikationssender (13);
- einen Strahlumschalter (12), der zwischen den Kommunikationssender (13) und die Sendeantennenanordnung (205) geschaltet ist, um Sendeleistung von dem Kommunikationssender (13) der Vielzahl von schmalwinkligen Strahlen (35-1 bis 35-4) selektiv zuzuführen;
- eine Empfangsantennenanordnung (21-1 bis 21-2) zur Bildung einer Vielzahl von Strahlen (20-1 bis 20-2); und
- einen Kommunikationsempfänger (15), der mit der Empfangsantennenanordnung (21-1 bis 21-2) verbunden ist, um Signale von einer Mobilstation zu empfangen und welcher enthält:
-- eine Richtungsmesseinheit (23) zur Messung, auf der Grundlage von von der Empfangsantennenanordnung (21-1 bis 21-2) empfangenen Signalen, der Richtung, in welcher die Mobilstation angeordnet ist, die die empfangenen Signale sendet und
-- eine Strahlauswahlsteuerschaltung (24) zur Steuerung des Strahlumschalters (12) durch Einspeisung einer Ausgabe von dem Sender (13) in einen der Vielzahl von schmalwinkligen Strahlen (35-1 bis 35-4) in Übereinstimmung mit einer gemessenen Richtung;
**dadurch gekennzeichnet, dass:**
- die Empfangsantennenanordnung (21-1 bis 21-2) durch ein Paar Empfangsantennen (21-1 bis 21-2) gebildet ist, die breitwinklige Strahlen (20-1 bis 20-2) bilden, wobei jeder breitwinklige Strahl (20-1 bis 20-2) das Versorgungsgebiet abdeckt und wobei beide Empfangsantennen (21-1 bis 21-2) so nahe aneinander angeordnet sind, dass sie innerhalb der Größenordnung einer halben Wellenlänge der beteiligten Funkwellen liegen, und wobei ihre breitwinkligen Strahlen (20-1 bis 20-2) zueinander parallele Mittelachsen haben;
- eine (21-2) der Empfangsantennen mit dem Kommunikationsempfänger (15) verbunden ist und die andere Empfangsantenne (21-1) mit einem Peilempfänger (22) verbunden ist;
- ein empfangenes Signal von den Kommunikationsempfänger (15) und ein empfangenes Signal von dem Peilempfänger (22) in die Richtungsmesseinheit (23) eingegeben werden, die die Richtung der Mobilstation auf der Grundlage einer Phasendifferenz zwischen beiden empfangenen Signalen bestimmt, und
- ein Resultat der Messung in die Strahlauswahlsteuerschaltung (24) eingegeben wird, die den Strahlumschalter (12) steuert, so dass Sendeleistung von dem Kommunikationssender (13) einem der schmalwinkligen Sendestrahlen (11-1 bis 11-4) geliefert wird, dessen Richtung auf die ermittelte Richtung ausgerichtet ist.

2. Gerät nach Anspruch 1, bei welchem N Gruppen, wobei N eine ganze Zahl gleich oder größer als 2 ist, aus Strahlumschalters (12), Kommunikationssender (13) und Kommunikationsempfänger (15) vorgesehen sind, ferner enthaltend:
eine Kombinier- und Verteileinrichtung (26) zum Kombinieren der Ausgaben von den Kommunikationssendern (13), welche von den N Strahlumschaltern (12) in einer den schmalwinkligen Strahlen (35-1 bis 35-4) jeweils entsprechenden Weise geliefert werden, und zum Verteilen des empfangenen Signals von der einen Empfangsantenne (21-2) auf die N Kommunikationsempfänger (15); und
eine Schalteranordnung (203) zur Lieferung der empfangenen Signale von den N Kommunikationsempfängern (15) in Zeitmultiplex-Weise in die Richtungsmesseinheit (23);
wobei die Strahlauswahlsteuerschaltung (24) so arbeitet, dass sie den einen der Strahlumschalter (12) steuert, der mit dem zur Ermittlung der gemessenen Richtung verwendeten Kommunikationsempfänger (15) ein Paar bildet.

3. Gerät nach Anspruch 1 oder 2, bei welchem die Sendeantennenanordnung (205) eine Vielzahl von Schmalwinkelstrahl-Antennen enthält, die jeweils einen der schmalwinkligen Strahlen (35-1 bis 35-4) bilden.

4. Gerät nach Anspruch 1 oder 2, bei welchem die Sendeantennenanordnung eine Mehrstrahlantenne (33) enthält, die eine Array-Antenne (31) enthält, welche eine Vielzahl von Antennenelementen (31-1 bis 31-4) hat, welche jeweils einen breitwinkligen Strahl bilden und in einem Abstand in der Größenordnung einer halben Wellenlänge angeordnet sind, sowie einen Strahlformer (32), um die Vielzahl der schmalwinkligen Strahlen (35-1 bis 35-4) zu definieren, und die Empfangsantennenanordnung die Mehrstrahlantenne und einen Strahl-Demultiplexer (37) aufweist, der von der Mehrstrahlantenne (33) in der Vielzahl von schmalwinkligen Strahlen (35-1 bis 35-4) empfangene Signale in zwei empfangene Signale demultiplex-bearbeitet, von welchen jedes das Richtwirkungsverhalten jeweils eines der beiden Antennenelemente (31-1, 31-2) in der Array-Antenne (31) hat.

5. Gerät nach einem der Ansprüche 1-4, bei welchem die Richtungsmesseinheit (23) eine Richtungsmessanordnung (44, 45) zur Messung der Phasendifferenz zwischen den beiden empfangenen Signalen zur Richtungsmessung, eine Entscheidungseinheit (65) für das Vorhandensein/Fehlen von Zuverlässigkeit der gemessenen Richtung und einen Ausgabeteil (53) zur Abgabe der gemessenen Richtung enthält, die durch die Entscheidungseinheit (65) für das Vorhandensein/Fehlen von Zuverlässigkeit als zuverlässig bestimmt wurde.

6. Gerät nach Anspruch 5, bei welchem die Entscheidungseinheit (65) für das Vorhandensein/Fehlen von Zuverlässigkeit eine Größenmesseinheit zur Messung der Größe mindestens eines der beiden empfangenen Signale, einen Speicher zur Speicherung der gemessenen Richtung und der gemessenen Größe und einen Maximalwertdetektor zum Erfassen eines größten der Vielzahl von jüngsten Werten der gemessenen Größe enthält, um die gemessene Richtung, die erhalten wird, wenn die erfasste maximale Größe gemessen wird, als zuverlässig zu bestimmen.

7. Gerät nach Anspruch 5, bei welchem die Entscheidungseinheit (65) für das Vorhandensein/Fehlen von Zuverlässigkeit eine Größenmesseinheit (47) zur Messung der Größe mindestens eines der beiden empfangenen Signale sowie einen Komparator (55) enthält, um zu bestimmen, ob die gemessene Größe einen Schwellenwert übersteigt oder nicht, und in dem Fall, dass bestimmt wird, dass die gemessene Größe den Schwellenwert überschritten hat, die gemessene Richtung als zuverlässig zu bestimmen.

8. Gerät nach Anspruch 5, bei welchem die Entscheidungseinheit (65) für das Vorhandensein/Fehlen von Zuverlässigkeit eine Differenzschaltung (58) zur Bestimmung einer Differenz zwischen der gegenwärtigen gemessenen Richtung und einer früheren gemessenen Richtung und einen Komparator (59) enthält, um zu bestimmen, ob die Differenz einen Schwellenwert überschritten hat oder nicht, und in dem Fall, dass festgestellt wird, dass die Differenz gleich oder kleiner als der Schwellenwert ist, die gegenwärtige gemessene Richtung als zuverlässig zu bestimmen.

9. Gerät nach Anspruch 5, bei welchem die Entscheidungseinheit (65) für das Vorhandensein/Fehlen von Zuverlässigkeit einen Speicher (46) zum Speichern der gemessenen Richtung, eine Differenzschaltung (58₁, 58₂, 58₃) zur Bestimmung der Differenz zwischen nebeneinander liegenden gemessenen Richtungen in einer Zeitabfolge gemessener Richtungen, die in dem Speicher (46) gespeichert sind, einschließlich der jüngsten gemessenen Richtung, und einen Minimalwertdetektor (63) enthält, um die kleinste Differenz zu erfassen und eine der beiden gemessenen Richtungen, die die kleinste Differenz ergeben, als zuverlässig zu bestimmen.

10. Gerät nach einem der Ansprüche 5-9, bei welchem die Richtungsmesseinheit (23) eine Messeinheit (44) zur mehrmaligen Messung einer momentanen Phasendifferenz zwischen beiden gleichzeitig empfangenen Signalen sowie eine Durchschnittswerteinrichtung (45) enthält, um eine mittlere gemessene Richtung entsprechend der Vielzahl von Werten der momentanen Phasendifferenz zu bestimmen und diese als die gemessene Richtung bereitzustellen.

11. Gerät nach Anspruch 6 oder 7, bei welchem die Größenmesseinheit eine Momentan-Größenmesseinheit zur mehrmaligen Messung einer momentanen Größe von gleichzeitig empfangenen Signalen sowie eine Durchschnittswerteinrichtung enthält, um einen Durchschnittswert der Vielzahl der Werte der momentanen Größe zu bilden, um die gemessene Größe bereitzustellen.

12. Gerät nach Anspruch 1, enthaltend:
eine Vielzahl von Breitwinkelstrahl-Kommunikationskanalsendern/-empfängern (137-1 bis 137-L), die in der Lage sind, einen der Strahlen der Empfangsantennenanordnung (21-1 bis 21-2) zu speisen, wobei jeder der Vielzahl der Breitwinkelstrahl-Kommunikationskanalsender/- empfänger einen mit dem Kommunikationsempfänger (15) identischen Empfänger (142) enthält;
eine Vielzahl von Schmalwinkelstrahl-Kommunikationskanalsendern/-empfängern (143-1 bis 143-L) die jeweils der Lage sind, einen jeweiligen der schmalwinkligen Strahlen der Sendeantennenanordnung (205) zu speisen, wobei jeder der Vielzahl der Schmalwinkelstrahl-Kommunikationskanalsender/-empfänger einen mit dem Kommunikationssender (13) identischen Sender (144) enthält; und
eine Basisstations-Steuereinrichtung (126) zur selektiven Zuordnung eines der Breitwinkelstrahl-Kommunikationskanalsender/-empfänger oder der Schmalwinkelstrahl-Kommunikationskanalsender/-empfänger für eine Kommunikation mit einer Mobilstation; und
einen Fahrgeschwindigkeitsdetektor (121), der mit einem der beiden empfangenen Signale gespeist wird, um Informationen zu erfassen, welche die Fahrgeschwindigkeit der das empfangene Signale sendenden Mobilstation darstellen;
wobei die Basisstations-Steuereinrichtung (126) dafür ausgelegt ist, einen der Breitwinkelstrahl-Kommunikationskanalsender/-empfänger oder der Schmalwinkelstrahl-Kommunikationskanalsender/-empfänger auf der Basis der erfassten Fahrgeschwindigkeit und der erfassten Richtung der Mobilstation selektiv zuzuweisen.

13. Gerät nach Anspruch 12, bei weichem das Basisstationsgerät zu einem Zeitmultiplex-Mehrfachzugriff-Kommunikationssystem gehört, wobei die Basisstations-Steuereinrichtung (126) eine Schalteranordnung (203) enthält, die den schmalwinkligen Strahl der Schmalwinkelstrahl-Kommunikationskanalsender/-empfänger in Übereinstimmung mit einem Zeitschlitz des Zeitmultiplex-Kommunikationssystems umschaltet, wobei die Basisstations-Steuereinrichtung (126) einen Zeitschlitz zuweist, der der Richtung der Mobilstation entspricht, wenn einer der Schmalwinkelstrahl-Kommunikationskanalsender/-empfänger zugewiesen wird.

14. Gerät nach Anspruch 12 oder 13, bei welchem die Richtungsmesseinheit (23) eine Entscheidungseinheit (65) für das Vorhandensein/Fehlen von Zuverlässigkeit enthält, um das Vorhandensein oder das Fehlen einer Zuverlässigkeit in der gemessenen Richtung zu bestimmen und die gemessene Richtung, die als zuverlässig bestimmt wird, bereitzustellen.

## Revendications

1. Equipement de station de base pour communication mobile comprenant :
- un ensemble (205) d'antennes d'émission destiné à former de multiples faisceaux (35-1 à 35-4) à angle étroit ayant des réponses en directivité qui sont orientées dans différentes directions et qui couvrent collectivement une certaine zone de service ;
- un émetteur (13) de communication ;
- un commutateur (12) de faisceaux connecté entre l'émetteur de communication (13) et l'ensemble (205) d'antennes d'émission pour fournir sélectivement de l'énergie d'émission depuis l'émetteur (13) de communication aux multiples faisceaux (35-1 à 35-4) à angle étroit ;
- un ensemble (21-1 à 21-2) d'antennes de réception destiné à former de multiples faisceaux (20-1 à 20-2) ; et
- un récepteur (15) de communication connecté à l'ensemble (21-1 à 21-2) d'antennes de réception pour recevoir des signaux depuis une station mobile et comportant :
- une unité (23) de mesure de direction destinée à mesurer, sur la base de signaux reçus par l'ensemble (21-1 à 21-2) d'antennes de réception, la direction dans laquelle la station mobile émettant les signaux reçus est située ; et
- un circuit (24) de commande de sélection de faisceau destiné à commander le commutateur (12) de faisceaux en fournissant un signal de sortie de l'émetteur (13) à l'un des multiples faisceaux (35-1 à 35-4) à angle étroit en fonction d'une direction mesurée ;
**caractérisé en ce que :**
- l'ensemble (21-1 à 21-2) d'antennes de réception est formé d'une paire d'antennes de réception (21-1 à 21-2) formant des faisceaux (20-1 à 20-2) à grand angle, dans lequel chaque faisceau (20-1 à 20-2) à grand angle couvre ladite zone de service et dans lequel les deux antennes de réception (21-1 à 21-2) sont placées à proximité l'une de l'autre afin de se trouver à moins de l'ordre d'une demi-longueur d'onde des ondes radio appliquées, et dans lequel leurs faisceaux (20-1 à 20-2) à grand angle ont des axes centraux qui sont parallèles entre eux ;
- une première (21-2) desdites antennes de réception est connectée au récepteur (15) de communication et l'autre antenne de réception (21-1) est connectée à un récepteur (22) de radiogoniométrie ;
- un signal reçu en provenance du récepteur (15) de communication et un signal reçu en provenance du récepteur (22) de radiogoniométrie sont appliqués en entrée à l'unité (23) de mesure de direction qui détermine la direction de la station mobile sur la base d'une différence de phase entre les deux signaux reçus ; et
- un résultat de la mesure est appliqué en entrée au circuit (24) de commande de sélection de faisceau qui commande le commutateur (12) de faisceaux, fournissant ainsi de l'énergie d'émission depuis l'émetteur (13) de communication à l'un des faisceaux d'émission (11-1 à 11-4) à angle étroit dont la direction est alignée avec la direction déterminée.

2. Equipement selon la revendication 1, dans lequel il est prévu N ensembles, où N est un entier égal ou supérieur à 2, constitués dudit commutateur (12) de faisceaux, dudit émetteur (13) de communication et dudit récepteur (15) de communication, comportant en outre :
une unité (26) de combinaison et de distribution destinée à combiner des signaux de sortie des émetteurs (13) de communication, qui sont fournis en provenance desdits N commutateurs (12) de faisceaux d'une manière correspondant à chacun des faisceaux (35-1 à 35-4) à angle étroit, et à distribuer le signal reçu provenant de ladite première antenne de réception (21-2) auxdits N récepteurs (15) de communication ; et
un ensemble (203) de communication destiné à fournir les signaux reçus provenant desdits N récepteurs (15) de communication à l'unité (23) de mesure de direction d'une manière répartie dans le temps ;
ledit circuit (24) de commande de sélection de faisceau fonctionnant de façon à commander le premier des commutateurs (12) de faisceaux qui forme une paire avec le récepteur (15) de communication qui est utilisé pour déterminer la direction mesurée.

3. Equipement selon la revendication 1 ou 2, dans lequel l'ensemble (205) d'antennes d'émission comprend de multiples antennes à faisceau à angle étroit formant chacune l'un, respectif, desdits faisceaux (35-1 à 34-4) à angle étroit.

4. Equipement selon la revendication 1 ou 2, dans lequel l'ensemble d'antennes d'émission comporte une antenne (33) à faisceaux multiples comprenant une antenne réseau (31) ayant de multiples éléments d'antenne (31-1 à 31-4) formant chacun un faisceau à grand angle et agencés à un espacement de l'ordre d'une moitié de la longueur d'onde et un conformateur (32) de faisceaux destiné à définir les multiples faisceaux (35-1 à 35-4) à angle étroit, et l'ensemble d'antennes de réception comprend l'antenne à faisceaux multiples, et un démultiplexeur (37) de faisceaux qui démultiplexe des signaux reçus par l'antenne (33) à faisceaux multiples dans les multiples faisceaux (35-1 à 35-4) à angle étroit en deux signaux reçus, ayant chacun la réponse en directivité de l'un, respectif, des deux éléments d'antenne (31-1, 31-2) dans l'antenne réseau (31).

5. Equipement selon l'une quelconque des revendications 1 à 4, dans lequel l'unité (23) de mesure de direction comporte un ensemble (44, 45) de mesure de direction destiné à mesurer ladite différence de phase entre deux signaux reçus pour mesurer une direction, une unité (65) de décision de présence/absence de fiabilité destinée à déterminer la présence ou l'absence d'une fiabilité dans la direction mesurée, et une partie (53) de sortie destinée à délivrer la direction mesurée qui a été déterminée comme étant fiable par l'unité (65) de décision de présence/absence de fiabilité.

6. Equipement selon la revendication 5, dans lequel l'unité (65) de décision de présence/absence de fiabilité comprend une unité de mesure d'amplitude destinée à mesurer l'amplitude d'au moins l'un des deux signaux reçus, une mémoire destinée à stocker la direction mesurée et l'amplitude mesurée, et un détecteur de valeur maximale destiné à détecter l'une, maximale, de multiples valeurs les plus tardives de l'amplitude mesurée pour déterminer que la direction mesurée qui est obtenue lorsque l'amplitude maximale détectée est fiable.

7. Equipement selon la revendication 5, dans lequel l'unité (65) de décision de présence/absence de fiabilité comprend une unité (47) de mesure d'amplitude destinée à mesurer l'amplitude d'au moins l'un des deux signaux reçus, et un comparateur (55) destinée à déterminer si l'amplitude mesurée dépasse ou non une valeur de seuil et, dans le cas où l'amplitude mesurée est déterminée comme ayant dépassé la valeur de seuil, à déterminer comme fiable la direction mesurée.

8. Equipement selon la revendication 5, dans lequel l'unité (65) de décision de présence/absence de fiabilité comprend un circuit de différence (58) destiné à déterminer une différence entre la direction alors mesurée et une direction mesurée précédente, et un comparateur (59) destiné à déterminer si la différence a dépassé ou non une valeur de seuil et, dans le cas où il est déterminé que la différence est égale ou inférieure à la valeur de seuil, à déterminer comme fiable la direction alors mesurée.

9. Equipement selon la revendication 5, dans lequel l'unité (65) de décision de présence/absence de fiabilité comprend une mémoire (46) destinée à stocker la direction mesurée, un circuit de différence (58₁, 58₂, 58₃) destiné à déterminer la différence entre des directions mesurées adjacentes dans une séquence temporelle de directions mesurées stockées dans la mémoire (46), incluant la dernière direction mesurée, et un détecteur (63) de valeur minimale destiné à détecter l'une, minimale, des différences et à déterminer comme fiable l'une des deux directions mesurées qui donnent la différence minimale.

10. Equipement selon l'une quelconque des revendications 5 à 9, dans lequel l'unité (23) de mesure de direction comprend une unité de mesure (44) destinée à mesurer une différence de phase instantanée entre deux signaux reçus concurremment, plusieurs fois, et une unité (45) d'établissement de moyenne destinée à déterminer une direction mesurée moyenne correspondant aux multiples valeurs de la différence de phase instantanée et à la fournir en tant que direction mesurée.

11. Equipement selon la revendication 6 ou 7, dans lequel l'unité de mesure d'amplitude comprend une unité de mesure d'amplitude instantanée destinée à mesurer une amplitude instantanée de signaux reçus concurremment plusieurs fois, et une unité d'établissement de moyenne destinée à établir la moyenne des multiples valeurs de l'amplitude instantanée pour fournir l'amplitude mesurée.

12. Equipement selon la revendication 1, comprenant :
de multiples émetteurs/récepteurs (137-1 à 137-L) à canaux de communication par faisceaux à grand angle capables de fournir l'un des faisceaux de l'ensemble (21-1 à 21-2) d'antennes de réception, chacun desdits multiples émetteurs/ récepteurs à canaux de communication à faisceaux à grand angle comprenant un récepteur (142) identique au récepteur (15) de communication ;
de multiples émetteurs/récepteurs (143-143-L) à canaux de communication à faisceaux à angle étroit capables chacun de fournir l'un, respectif, desdits faisceaux à angle étroit de l'ensemble (205) d'antennes d'émission, chacun desdits multiples émetteurs/récepteurs à canaux de communication à faisceaux à angle étroit comprenant un émetteur (144) identique à l'émetteur (13) de communication ; et
une unité (126) de commande de station de base destinée à affecter sélectivement l'un des émetteurs/récepteurs à canaux de communication à faisceaux à grand angle ou des émetteurs/récepteurs de communication à faisceaux à angle étroit pour une communication avec une station mobile ; et
un détecteur (121) de vitesse de déplacement qui est alimenté avec l'un des deux signaux reçus pour détecter une information représentant la vitesse de déplacement de la station mobile qui émet le signal reçu ;
dans lequel l'unité (126) de commande de station de base est conçue pour affecter sélectivement l'un des émetteurs/récepteurs à canaux de communication à faisceaux à grand angle ou des émetteurs/récepteurs de communication à faisceaux à angle étroit sur la base de la vitesse de déplacement détectée et de la direction détectée de la station mobile.

13. Equipement selon la revendication 12, dans lequel l'équipement de la station de base fait partie d'un système de communication par accès multiples à répartition dans le temps, l'unité (126) de commande de la station de base comprenant un ensemble de commutation (203) qui commute le faisceau à angle étroit des émetteurs/récepteurs à canaux de communication à faisceaux à angle étroit en fonction d'un créneau temporel du système de communication par répartition temporelle, l'unité (126) de commande de la station de base affectant un créneau temporel qui correspond à la direction de la station mobile lors de l'affectation de l'un des émetteurs/récepteurs à canaux de communication à faisceaux à angle étroit.

14. Equipement selon la revendication 12 ou 13, dans lequel l'unité (23) de mesure de direction comporte une unité (65) de décision de présence/absence de fiabilité destinée à déterminer la présence ou l'absence d'une fiabilité dans la direction mesurée et à délivrer la direction mesurée qui est déterminée comme fiable.
